# EUROPEAN PATENT SPECIFICATION

(11) **EP 2 833 135 B1**
(45) Date of publication and mention of the grant of the patent: **21.12.2016**
(21) Application number: 14178956.0
(22) Date of filing: 29.07.2014
(51) Int. Cl.: G01N 27/419, G01N 27/417, G01N 27/416, G01N 33/00

(54) **Gas sensor**
Gassensor
Capteur de gaz

(30) Priority: 02.08.2013 JP 2013161353
(43) Date of publication of application: 04.02.2015
(73) Proprietor: NGK Insulators, Ltd., Nagoya-city, Aichi 467-8530 (JP)
(72) Inventor: Nakasone, Osamu, Nagoya-city, Aichi 467-8530 (JP); Hirata, Noriko, Nagoya-city, Aichi 467-8530 (JP)
(74) Representative: Naylor, Matthew John

(56) References cited:
- EP-A1- 0 678 740
- EP-A1- 1 912 064
- EP-A2- 2 803 990
- JP-A- 2004 177 165
- US-A- 6 045 673

## Description

### BACKGROUND OF THE INVENTION

### Field of the Invention

The present invention relates to a gas sensor and a method that detects water vapor and carbon dioxide in a measurement gas.

### Description of the Background Art

For example, in combustion control of internal combustion engines such as vehicle engines, environmental control such as exhaust gas control, or various fields including medical, biotechnology, and agriculture and industry fields, there are needs for accurately obtaining a concentration of a target gas component. Various measurement and evaluation techniques and apparatuses have conventionally been researched and studied in response to such needs.

For example, it is well known that in theory, a limiting-current type oxygen sensor can measure a water vapor concentration and a carbon dioxide concentration, as well as an oxygen concentration (for example, see Hideaki Takahashi, Keiichi Saji, Haruyoshi Kondo, "Thin-film Limiting-current Type Oxygen Sensor," Vol. 27 No. 2 pp.47-57, R&D Review of Toyota Central R&D Labs., Inc.).

The apparatus that measures carbon dioxide and water is well known, which includes two sensors each including two oxygen pumping cells and obtains a carbon dioxide concentration and a water (water vapor) concentration by an inverse matrix operation based on the pumping currents in the four pumping cells (for example, see Japanese Examined Patent Application Publication No. 06-76990 (1994)).

The carbon dioxide sensor, which has increased specificity to carbon dioxide and decreased sensitivity to water vapor, is well known (for example, see Japanese Patent Application Laid-Open No. 09-264873 (1997)).

When a carbon dioxide gas in a measurement gas is a detection target, the measurement gas often contains water vapor (water). Japanese Patent Application Laid-Open No. 09-264873 (1997) first points out such a problem that typical carbon dioxide sensors are susceptible to humidity, and then discloses that a carbon dioxide sensor having low sensitivity to water vapor has been achieved.

Unfortunately, the carbon dioxide sensor disclosed in Japanese Patent Application Laid-Open No. 09-264873 (1997) is susceptible to temperature changes of a measurement gas due to the principle of mixed potential.

For a measurement gas contains water vapor and carbon dioxide, both may be expected to be measured. The apparatus disclosed in Japanese Examined Patent Application Publication No. 06-76990 (1994) enables the above-mentioned measurement in theory. However, this apparatus has yet to be put to practical use because it has a complex configuration and needs to undergo a complicated calibration process.

In particular, the exhaust gas from the internal combustion engine such as a vehicle engine contains a number of components such as oxygen, water vapor, carbon dioxide, hydrocarbon gas, and inflammable gases, and besides, the component ratio and temperatures thereof may vary momentarily. No technique has been established which accurately obtains the concentrations of water vapor and carbon dioxide in the exhaust gas. This measurement is difficult to perform particularly because the condition for decomposing carbon dioxide is similar to the condition for decomposing water vapor.

EP-A-2803990, published on 19 November 2014, describes a gas sensor which measures hydrocarbon concentration in a gas which also contains water vapour. The sensor has an oxygen-ion conductive solid electrolyte. At a first space, to which the gas to be measured is admitted via a diffusion resistance, there is an oxygen pumping cell which pumps out oxygen so that hydrocarbon is not burned, while water is converted to hydrogen and oxygen and carbon dioxide to carbon monoxide and oxygen. In a second space, connected to the first space by a second diffusion resistance, there is a second pumping cell so that hydrogen and carbon monoxide are burned, while the hydrocarbon remains unburnt. To measure the hydrocarbon either there is a further electrode of a third cell, covered by a porous layer acting as a third diffusion part, at which the hydrocarbon is burned, or a third space, connected to the second space by a diffusion resistance and containing an electrode of a third cell, at which the hydrocarbon is burned.

EP-A-1912064 describes a NOx sensor also having an oxygen-ion conductive solid electrolyte and three oxygen pumping cells. In a first space, connected to the gas to be measured by a first diffusion resistance, oxygen partial pressure is controlled to a predetermined level. In a second space, connected to the first by a second diffusion resistance, the oxygen partial pressure is reduced to a low value which does not affect the measurement of NOx. In the second space there is a measuring electrode of a third cell covered by a porous layer which acts a third diffusion resistance. NOx is decomposed at the measuring electrode to generate oxygen. The NOx concentration can be calculated form the current of the third cell. It is mentioned that this sensor may alternatively be used to measure water and carbon dioxide.

US 6045673 shows a sensor for an inflammable gas component, which operates on a principle similar to that of EP-A-1912064. It is mentioned that the sensor may be used for detection of water and carbon dioxide, among other gases.

JP-A-2004-177165 describes a sensor for detecting hydrogen gas at low concentration, making use of Knudsen diffusion. A pump current between electrodes oxidizes hydrogen, while a combustible gas in the gas being measured is oxidized at another electrode.

### SUMMARY OF THE INVENTION

The present invention is directed to a gas sensor that has a sensor element formed of an oxygen-ion conductive solid electrolyte and detects water vapor and carbon dioxide in a measurement gas.

A gas sensor according to the present invention is set out in claim 1.

The method of the invention is set out in claim 10.

The present invention can accurately obtain a water vapor concentration and a carbon dioxide concentration irrespective of whether a measurement gas contains one or both of a water vapor component and a carbon dioxide component.

The present invention therefore has an object to provide a gas sensor capable of accurately obtaining the concentrations of water vapor and carbon dioxide in a measurement gas containing non-target gas components.

### BRIEF DESCRIPTION OF THE DRAWINGS

Fig. 1 is a cross-sectional view schematically showing the structure of a gas sensor 100 according to a first embodiment;
Fig. 2 schematically shows a graph showing the functional relationship between an absolute value of a water vapor detection current Ip1 or a carbon dioxide detection current Ip2 and an actual concentration of water vapor or carbon dioxide;
Fig. 3 is a cross-sectional view schematically showing the structure of a gas sensor 200 according to a second embodiment;
Fig. 4 is a graph showing the relationship between a water vapor concentration of a model gas and the water vapor detection current Ip1;
Fig. 5 is a graph showing the relationship between a carbon dioxide concentration of a model gas and the carbon dioxide detection current Ip2; and
Fig. 6 is a graph showing the relationship between the carbon dioxide detection current Ip2 and a carbon dioxide concentration of an actual exhaust gas.

### DESCRIPTION OF THE PREFERRED EMBODIMENTS

### <First Embodiment>

### <Outline Configuration of Gas Sensor>

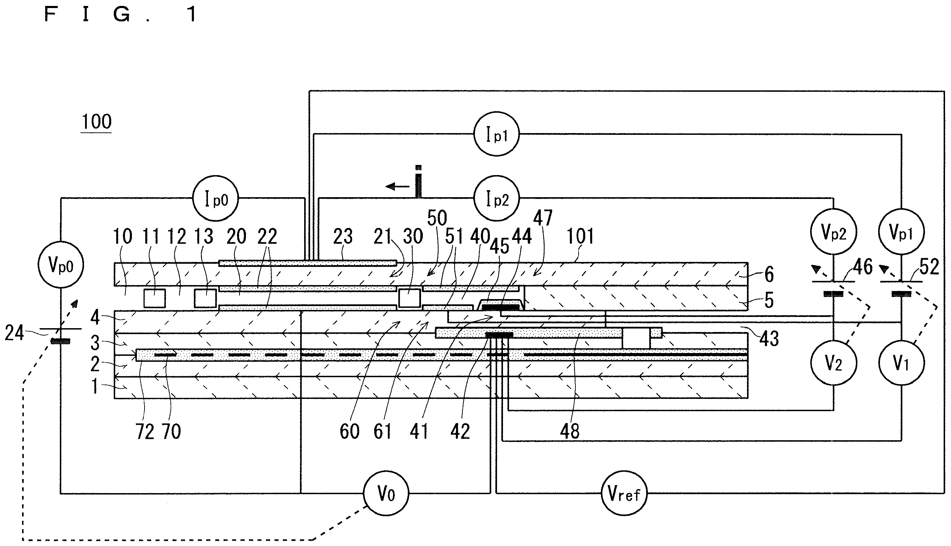

Fig. 1 is a cross-sectional view schematically showing the structure of a gas sensor 100 according to a first embodiment of the present invention. The gas sensor 100 according to this embodiment serves to detect water vapor (H₂O) and carbon dioxide (CO₂) and obtain concentrations thereof. A sensor element 101 being a main part thereof includes, as a structural material, ceramics mainly composed of zirconia that is an oxygen-ion conductive solid electrolyte.

Although this embodiment is mainly described assuming that a measurement gas contains both of water vapor and carbon dioxide, the measurement gas does not necessarily need to contain both of them.

The sensor element 101 has the structure in which six layers, namely, a first substrate layer 1, a second substrate layer 2, a third substrate layer 3, a first solid electrolyte layer 4, a spacer layer 5, and a second solid electrolyte layer 6 each formed of an oxygen-ion conductive solid electrolyte, are laminated in the stated order from the bottom side of the sheet of Fig. 1.

Provided between a lower surface of the second solid electrolyte layer 6 and an upper surface of the first solid electrolyte layer 4 on one-end-portion side of the sensor element 101 are a gas inlet 10, a first diffusion control part 11, a first internal space 20, a second diffusion control part 30, and a second internal space 40. A buffer space 12 and a fourth diffusion control part 13 may be further provided between the first diffusion control part 11 and the first internal space 20. The gas inlet 10, the first diffusion control part 11, the buffer space 12, the fourth diffusion control part 13, the first internal space 20, the second diffusion control part 30, and the second internal space 40 are adjacently formed so as to be in communication with one another in the stated order. The part extending from the gas inlet 10 to the second internal space 40 is referred to as a gas distribution part as well.

The gas inlet 10, the buffer space 12, the first internal space 20, and the second internal space 40 are interior spaces provided by hollowing out the spacer layer 5. The buffer space 12, the first internal space 20, and the second internal space 40 are each provided, with its upper portion defined by the lower surface of the second solid electrolyte layer 6, its lower portion defined by the upper surface of the first solid electrolyte layer 4, and its side portion defined by a side surface of the spacer layer 5.

The first diffusion control part 11, the second diffusion control part 30, and the fourth diffusion control part 13 are each provided as two horizontally long slits (which are openings longitudinally extending to be vertical to the sheet of Fig. 1).

At a position that is located between an upper surface of the third substrate layer 3 and a lower surface of the spacer layer 5 and is farther from the distal-end side than the gas distribution part, a reference gas introduction space 43 is provided. The reference gas introduction space 43 is an interior space with its upper portion defined by the lower surface of the spacer layer 5, its lower portion defined by the upper surface of the third substrate layer 3, and its side portion defined by a side surface of the first solid electrolyte layer 4. For example, oxygen or air is introduced into the reference gas introduction space 43 as a reference gas.

The gas inlet 10 is a part being open to the outside. Through this gas inlet 10, a measurement gas is taken into the sensor element 101 from the outside.

The first diffusion control part 11 is a part that applies a predetermined diffusion resistance to the measurement gas taken through the gas inlet 10.

The buffer space 12 is provided to cancel concentration fluctuations of the measurement gas which are caused due to pressure fluctuations of the measurement gas in the outside (in a case where the measurement gas is a vehicle exhaust gas, pulsations of the exhaust gas pressure). The sensor element 101 does not necessarily need to include the buffer space 12.

The fourth diffusion control part 13 is a part that applies a predetermined diffusion resistance to the measurement gas introduced from the buffer space 12 into the first internal space 20. The fourth diffusion control part 13 is a part provided in association with the provision of the buffer space 12.

The first diffusion control part 11 and the first internal space 20 are directly in communication with each other if the buffer space 12 and the fourth diffusion control part 13 are not provided.

The first internal space 20 is provided as a space for adjusting an oxygen partial pressure of the measurement gas introduced through the gas inlet 10. This oxygen partial pressure is adjusted through the operation of a main pumping cell 21.

The main pumping cell 21 is an electrochemical pumping cell (main electrochemical pumping cell) formed of a main inside pump electrode 22, an outside pump electrode 23, and the oxygen-ion conductive solid electrolyte sandwiched between these electrodes. The main inside pump electrode 22 is provided on substantially the entire upper surface of the first solid electrolyte layer 4, substantially the entire lower surface of the second solid electrolyte layer 6, and substantially the entire side surface of the spacer layer 5, those surfaces defining the first internal space 20. The outside pump electrode 23 is provided so as to be exposed to the outside in the region corresponding to the main inside pump electrode 22 on the upper surface of the second solid electrolyte layer 6. The main inside pump electrode 22 and the outside pump electrode 23 are each formed as a porous cermet electrode rectangular in plan view (for example, a cermet electrode made of a precious metal such as Pt containing 0.1 wt% to 30.0 wt% of Au, and ZrO₂).

The main pumping cell 21 causes, upon application of a pump voltage Vp0 by a variable power source 24 provided outside the sensor element 101, a pump current Ip0 to flow between the outside pump electrode 23 and the main inside pump electrode 22, allowing oxygen in the first internal space 20 to be pumped out to the outside or outside oxygen to be pumped into the first internal space 20.

In the sensor element 101, the main inside pump electrode 22, a reference electrode 42 sandwiched between the upper surface of the third substrate layer 3 and the first solid electrolyte layer 4, and the oxygen-ion conductive solid electrolyte sandwiched between these electrodes constitute a first oxygen-partial-pressure detection sensor cell 60 being an electrochemical sensor cell. The reference electrode 42 is an electrode substantially rectangular in plan view, which is formed of a porous cermet similar to, for example, the outside pump electrode. Provided around the reference electrode 42 is a reference gas introduction layer 48 that is made of porous alumina and is continuous with the reference gas introduction space, so that the reference gas of the reference gas introduction space 43 is introduced to the surface of the reference electrode 42. In the first oxygen-partial-pressure detection sensor cell 60, an electromotive force V0 is generated between the main inside pump electrode 22 and the reference electrode 42, which results from an oxygen concentration difference between the atmosphere in the first internal space 20 and the reference gas of the reference gas introduction space 43.

The electromotive force V0 generated in the first oxygen-partial-pressure detection sensor cell 60 varies in accordance with the oxygen partial pressure in the atmosphere existing in the first internal space 20. The sensor element 101 uses this electromotive force V0 to feedback-control the variable power source 24 for the main pumping cell 21. This allows the pump voltage Vp0, which is applied to the main pumping cell 21 by the variable power source 24, to be controlled in accordance with the oxygen partial pressure in the atmosphere of the first internal space 20.

The second diffusion control part 30 is a part that applies a predetermined diffusion resistance to the measurement gas introduced from the first internal space 20 into the second internal space 40.

The second internal space 40 is provided as a space for performing the process for measuring the concentrations of water vapor and carbon dioxide in the measurement gas introduced through the second diffusion control part 30. In the second internal space 40, oxygen can be supplied from the outside through the operation of an first measuring pumping cell 50.

The first measuring pumping cell 50 is an auxiliary electrochemical pumping cell (first measuring electrochemical pumping cell) formed of a first measuring inside pump electrode 51, the outside pump electrode 23, and the oxygen-ion conductive solid electrolyte sandwiched between these electrodes. The first measuring inside pump electrode 51 is provided on substantially the entire upper surface of the first solid electrolyte layer 4, the lower surface of the second solid electrolyte layer 6, and part of the side surface of the spacer layer 5, those surfaces defining the second internal space 40. The first measuring inside pump electrode 51 is formed as a porous cermet electrode rectangular in plan view, similarly to the outside pump electrode 23 and the main inside pump electrode 22. The use of the outside pump electrode 23 is not necessarily required, and other cermet electrode provided on the outer surface of the sensor element 101 may form the first measuring pumping cell 50, in place of the outside pump electrode 23.

The first measuring pumping cell 50 causes, upon application of a pump voltage Vp1 by a variable power source 52 provided outside the sensor element 101, a pump current (water vapor detection current) Ip1 to flow between the outside pump electrode 23 and the first measuring inside pump electrode 51, so that oxygen can be pumped into the second internal space 40 (particularly near the surface of the first measuring inside pump electrode 51).

In the sensor element 101, the first measuring inside pump electrode 51, the reference electrode 42, and the oxygen-ion conductive solid electrolyte sandwiched between these electrodes constitute a second oxygen-partial-pressure detection sensor cell 61 being an electrochemical sensor cell. In the second oxygen-partial-pressure detection sensor cell 61, an electromotive force V1 is generated between the first measuring inside pump electrode 51 and the reference electrode 42, which results from an oxygen concentration difference between the atmosphere in the second internal space 40, particularly near the surface of the first measuring inside pump electrode 51, and the reference gas of the reference gas introduction space 43.

The electromotive force V1 to be generated in the second oxygen-partial-pressure detection sensor cell 61 varies in accordance with the oxygen partial pressure in the atmosphere existing near the surface of the first measuring inside pump electrode 51. The sensor element 101 uses this electromotive force V1 to feedback-control the variable power source 52 for the first measuring pumping cell 50. This allows the pump voltage Vp1, which is applied to the first measuring pumping cell 50 by the variable power source 52, to be controlled in accordance with the oxygen partial pressure in the atmosphere existing near the surface of the first measuring inside pump electrode 51.

The sensor element 101 further includes a second measuring pumping cell 47 and a third oxygen-partial-pressure detection sensor cell 41. The second measuring pumping cell 47 is an electrochemical sensor cell (second measuring electrochemical pumping cell) formed of the outside pump electrode 23, a second measuring inside pump electrode 44, and the oxygen-ion conductive solid electrolyte sandwiched between these electrodes. The third oxygen-partial-pressure detection sensor cell 41 is an electrochemical pumping cell formed of the second measuring inside pump electrode 44, the reference electrode 42, and the oxygen-ion conductive solid electrolyte sandwiched between these electrodes.

The second measuring inside pump electrode 44 is an electrode substantially rectangular in plan view, which is formed of a porous cermet similarly to, for example, the outside pump electrode. The second measuring inside pump electrode 44 is formed at a position opposite to the second diffusion control part 30 with respect to the first measuring inside pump electrode 51, schematically, at a position farther from the second diffusion control part 30 than the first measuring inside pump electrode 51. However, the second measuring inside pump electrode 44 is covered with a third diffusion control part 45. The third diffusion control part 45 is a porous alumina layer, which is a part that applies a predetermined diffusion resistance to the measurement gas expected to come into contact with the second measuring inside pump electrode 44 in the second internal space 40. In other words, the third diffusion control part 45, which is assumed to limit an amount of the inflammable gas that comes into contact with the second measuring inside pump electrode 44, isolates the second measuring inside pump electrode 44 from the second internal space 40. The third diffusion control part 45 also functions as an electrode protecting layer that protects the second measuring inside pump electrode 44 from, for example, particle adhesion.

In the third oxygen-partial-pressure detection sensor cell 41, an electromotive force V2 is generated between the second measuring inside pump electrode 44 and the reference electrode 42, which results from an oxygen concentration difference between the atmosphere near the surface of the second measuring inside pump electrode 44 covered with the third diffusion control part 45 and the reference gas of the reference gas introduction space 43. In this embodiment, the surface of the second measuring inside pump electrode 44 also includes wall portions of a number of minute holes located to be in communication with the outside in the porous cermet forming the second measuring inside pump electrode 44, not only the portion being in contact with the third diffusion control part 45.

The electromotive force V2 to be generated in the third oxygen-partial-pressure detection sensor cell 41 varies in accordance with an oxygen partial pressure of the atmosphere existing near the surface of the second measuring inside pump electrode 44. The sensor element 101 uses this electromotive force V2 to feedback-control a variable power source 46 for the second measuring pumping cell 47. This allows the pump voltage Vp2, which is applied to the second measuring pumping cell 47 by the variable power source 46, to be controlled in accordance with the oxygen partial pressure of the atmosphere near the surface of the second measuring inside pump electrode 44.

The sensor element 101 is also configured to measure an electromotive force V_{ref} generated between the outside pump electrode 23 and the reference electrode 42 to obtain the oxygen partial pressure outside the sensor element 101.

In the sensor element 101, further, a heater 70 is formed to be vertically sandwiched between the second substrate layer 2 and the third substrate layer 3. The heater 70 generates heat by power feeding from the outside through a heater electrode (not shown) provided on the lower surface of the first substrate layer 1. Heat generation by the heater 70 increases the oxygen-ion conductivity of the solid electrolyte forming the sensor element 101. The heater 70 is buried over the entire area extending from the first internal space 20 to the second internal space 40 to heat a predetermined portion of the sensor element 101 to a predetermined temperature or maintain the temperature of the predetermined portion at a predetermined temperature. Formed on the upper and lower surfaces of the heater 70 is a heater insulating layer 72 made of, for example, alumina to obtain electrical insulation between the second substrate layer 2 and the third substrate layer 3 (hereinafter, the heater 70, the heater electrode, and the heater insulating layer 72 are correctively referred to as a heater part as well).

### <Measurements of Concentrations of Water Vapor and Carbon Dioxide>

The technique of identifying the concentrations of water vapor and carbon dioxide in a measurement gas with the gas sensor 100 having the above-mentioned configuration will be described next.

First, the sensor element 101 is placed in the atmosphere of the measurement gas containing oxygen, water vapor, carbon dioxide, noninflammable (inert) gases, or the like. So, the measurement gas is introduced into the sensor element 101 through the gas inlet 10. The measurement gas which has been introduced into the sensor element 101 reaches the first internal space 20, following the application of a predetermined diffusion resistance by the first diffusion control part 11 or further by the fourth diffusion control part 13.

In the first internal space 20, through the operation of the main pumping cell 21, oxygen is pumped out such that the oxygen partial pressure of the inside measurement gas has a sufficiently low predetermined value (for example, 10⁻¹⁰ atm to 10⁻³⁰ atm) to an extent that substantially all of the water vapor and carbon dioxide contained in the measurement gas are decomposed. Here, "substantially all of the water vapor and carbon dioxide contained in the measurement gas are decomposed" means that the water vapor and carbon dioxide introduced into the first internal space 20 are not introduced into the second internal space 40.

When oxygen is pumped out of the first internal space 20 in such a manner, the decomposition reaction of water vapor (2H₂O→2H₂+O₂) and the decomposition reaction of carbon dioxide (2CO₂→2CO+O₂) are promoted in the first internal space 20 to generate hydrogen and oxygen through the former decomposition reaction and generate carbon monoxide and oxygen through the latter decomposition reaction. Of those, oxygen is pumped out by the main pumping cell 21, but hydrogen and carbon monoxide are introduced into the second internal space 40 together with the other gases.

Actual pumping-out of oxygen is implemented in a manner that a target value of the electromotive force V0, which is generated between the main inside pump electrode 22 and the reference electrode 42 in the first oxygen-partial-pressure detection sensor cell 60, is preliminarily determined to such a predetermined value as to obtain the above-mentioned oxygen partial pressure, and then the variable power source 24 controls the pump voltage Vp0 to be applied to the main pumping cell 21 in accordance with a difference between an actual value of the electromotive force V0 and the target value. For example, when the measurement gas containing a large amount of oxygen reaches the first internal space 20, the value of the electromotive force V0 displaces considerably from the target value. Therefore, the variable power source 24 controls the pump voltage Vp0 to be applied to the main pumping cell 21 in order to reduce such a displacement.

The target value of the electromotive force V0 is preferably set such that a (target) oxygen partial pressure in the first internal space 20 becomes smaller as the oxygen partial pressure in the measurement gas that has reached the first internal space 20 becomes larger (as a difference between the measured value of the electromotive force V0 and the latest determined target value becomes larger). This allows oxygen to be pumped out more reliably.

The measurement gas whose oxygen partial pressure has been decreased as described above reaches the second internal space 40, following the application of a predetermined diffusion resistance by the second diffusion control part 30.

In the second internal space 40, oxygen is pumped in through the operation of the first measuring pumping cell 50. This pumping-in of oxygen is performed to cause, of the measurement gas having reached a position near the surface of the first measuring inside pump electrode 51 of the second internal space 40, which contains hydrogen and carbon monoxide generated in the first internal space 20, hydrogen alone to selectively react with oxygen existing at this position for burning. In other words, oxygen is pumped in by the first measuring pumping cell 50 such that the reaction of 2H₂+O₂→ 2H₂O is promoted to generate again water vapor of an amount correlated with an amount of water vapor introduced through the gas inlet 10. In this embodiment, "to be correlated with an amount of water vapor or carbon dioxide" means that an amount of water vapor or carbon dioxide introduced through the gas inlet 10 and an amount of water vapor or carbon dioxide, which is generated again as a result of hydrogen or carbon monoxide generated through decomposition of hydrogen or carbon monoxide, are equal to each other or fall within a certain error range allowable in terms of measurement accuracy.

Actual pumping-in of oxygen is implemented in a manner that a target value of the electromotive force V1, which is generated between the first measuring inside pump electrode 51 and the reference electrode 42 in the second oxygen-partial-pressure detection sensor cell 61, is preliminarily determined to such a predetermined value as to obtain an oxygen partial pressure enough to burn all the hydrogen contained in the measurement gas that has reached near the surface of the first measuring inside pump electrode 51 and to burn substantially no carbon monoxide contained in the measurement gas, and then the variable power source 52 controls the pump voltage Vp1 to be applied to the first measuring pumping cell 50 in accordance with a difference between an actual value of the electromotive force V1 and the target value. For example, when the measurement gas containing a large amount of hydrogen reaches near the first measuring inside pump electrode 51 and reacts with oxygen, the oxygen partial pressure decreases, whereby the value of the electromotive force V1 displaces considerably from the target value. Therefore, the variable power source 52 controls the pump voltage Vp1 to be applied to the first measuring pumping cell 50 in order to reduce such a displacement.

The current (water vapor detection current) Ip1 flowing through the first measuring pumping cell 50 at this time is substantially proportional to the concentration of water vapor generated through burning of hydrogen near the surface of the first measuring inside pump electrode 51 (the water vapor detection current Ip1 and the water vapor concentration have a linear relationship). The amount of water vapor to be generated through such burning is correlated with the amount of water vapor in the (original) measurement gas, which has been introduced through the gas inlet 10 and is then decomposed once in the first internal space 20. Therefore, the detection of the water vapor detection current Ip1 allows the water vapor concentration of the (original) measurement gas to be obtained based on the value of the water vapor detection current Ip1. How to actually identify a water vapor concentration will be described below.

If the measurement gas introduced through the gas inlet 10 contains no water vapor, needless to say, water vapor is not decomposed in the first internal space 20, and thus, hydrogen is not introduced into the second internal space 40. Therefore, the electromotive force V1 keeps a target value in the state in which such a slight amount of the water vapor detection current Ip1 that corresponds to an offset current OFS2 described below flows.

Meanwhile, the measurement gas in which hydrogen has been burned reaches the surface of the second measuring inside pump electrode 44, following the application of a predetermined diffusion resistance by the third diffusion control part 45.

At the surface of the second measuring inside pump electrode 44, pumping-in of oxygen is performed through the operation of the second measuring pumping cell 47. This pumping-in of oxygen is performed so as to selectively burn only the carbon monoxide of the measurement gas containing carbon monoxide generated in the first internal space 20, which has reached near the surface of the second measuring inside pump electrode 44. In other words, oxygen is pumped in to the surface of the second measuring inside pump electrode 44 such that the reaction of 2CO+O₂→2CO₂ is promoted to generate again an amount of carbon dioxide correlated with the amount of the carbon dioxide introduced through the gas inlet 10.

Actual pumping-in of oxygen is implemented in a manner that a target value of the electromotive force V2, which is generated between the second measuring inside pump electrode 44 and the reference electrode 42 in the third oxygen-partial-pressure detection sensor cell 41, is preliminarily determined to such a predetermined value as to obtain an oxygen partial pressure enough to burn carbon monoxide and to burn substantially no hydrocarbon gas contained in the measurement gas, and then the variable power source 46 controls the pump voltage Vp2 to be applied to the second measuring pumping cell 47 in accordance with a difference between an actual value of the electromotive force V2 and the target value. For example, when the measurement gas containing a large amount of carbon monoxide reaches near the surface of the second measuring inside pump electrode 44 and reacts with oxygen, the oxygen partial pressure decreases, whereby the value of the electromotive force V2 displaces considerably from the target value. Therefore, the variable power source 46 controls the pump voltage Vp2 to be applied to the second measuring pumping cell 47 in order to reduce such a displacement.

The current (carbon dioxide detection current) Ip2 flowing through the second measuring pumping cell 47 at this time is substantially proportional to the concentration of carbon dioxide generated through burning of carbon monoxide on the surface of the second measuring inside pump electrode 44 (the carbon dioxide detection current Ip2 and the carbon dioxide concentration have a linear relationship). The amount of carbon dioxide to be generated through such burning is correlated with the amount of carbon dioxide in the (original) measurement gas, which has been introduced through the gas inlet 10 and is then decomposed once in the first internal space 20. Therefore, the detection of the carbon dioxide detection current Ip2 allows the carbon dioxide concentration of the (original) measurement gas to be obtained based on the value of the carbon dioxide detection current Ip2. How to actually identify a water vapor concentration will be described below.

If the measurement gas introduced through the gas inlet 10 contains no carbon dioxide, needless to say, carbon dioxide is not decomposed in the first internal space 20, and thus, carbon monoxide is not introduced into the second internal space 40. Therefore, the electromotive force V2 keeps a target value in the state in which such a slight amount of the carbon dioxide detection current Ip2 that corresponds to the offset current OFS2 described below flows.

The above-mentioned manner of controlling an oxygen partial pressure facilitates selective burning of hydrogen near the surface of the first measuring inside pump electrode 51 and selective burning of carbon monoxide on the surface of the second measuring inside pump electrode 44. This is because due to a difference in gas diffusion rate between hydrogen and carbon monoxide, hydrogen has a higher gas diffusion rate and is more likely to come into contact with oxygen for burning than carbon monoxide, and hydrogen is more likely to combine with oxygen, that is, is more likely to burn, than carbon monoxide.

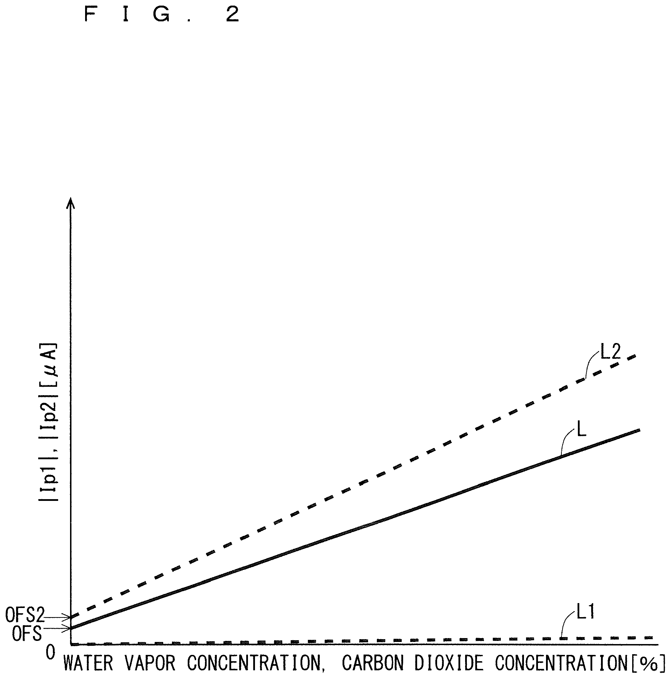

Fig. 2 schematically shows a graph (sensitivity characteristics) showing the functional relationship between an absolute value of the water vapor detection current Ip1or the carbon dioxide detection current Ip2 and an actual concentration of water vapor or carbon dioxide. Fig. 2 shows the values of the water vapor detection current Ip1 and the carbon dioxide detection current Ip2 as absolute values for brevity of the description. More specifically, in a case where oxygen is pumped in to near the surface of the first measuring inside pump electrode 51 and to the surface of the second measuring inside pump electrode 44 in the gas sensor 100 of Fig. 1, the water vapor detection current Ip1 and the carbon dioxide detection current Ip2 have negative values.

Fig. 2 illustrates an ideal functional relationship between the water vapor detection current Ip1 and the water vapor concentration and an ideal functional relationship between the carbon dioxide detection current Ip2 and the carbon dioxide concentration by the solid line L. The solid line L is a straight line with a non-zero intercept on the vertical axis. Although Fig. 2 illustrates only one solid line L for the sake of convenience, in actuality, the sensitivity characteristics of water vapor and the sensitivity characteristics of carbon dioxide differ from each other, and accordingly, the functional relationships thereof (the inclination and a value of the intercept) generally do not coincide with each other. Although the values of the water vapor detection current Ip1 and the carbon dioxide detection current Ip2 with zero water vapor concentration and zero carbon dioxide concentration (with no water vapor and no carbon dioxide) should be originally zero, in actuality, a slight amount of the pump-in current for obtaining a target oxygen concentration, namely, the water vapor detection current Ip1 and the carbon dioxide detection current Ip2 flow, even when no water vapor and no carbon dioxide exist. This is because oxygen becomes scarce compared to a target oxygen concentration (oxygen partial pressure) near the surface of the first measuring inside pump electrode 51 and near the surface of the second measuring inside pump electrode 44, due to an influence of the main pumping cell 21 pumping out oxygen. In particular, the water vapor detection current Ip1 and the carbon dioxide detection current Ip2 at this time are referred to as an offset current OFS.

In the gas sensor 100 according to this embodiment, prior to its use, the sensitivity characteristics (specifically, the offset current OFS and the inclination of the graph) as shown in Fig. 2 are preliminarily identified for each sensor element 101 based on the values of the water vapor detection current Ip1 and the carbon dioxide detection current Ip2 obtained when the gas having a known water vapor concentration and a known carbon dioxide concentration is supplied to the gas sensor 100. In actually detecting water vapor and carbon dioxide, the values of the water vapor detection current Ip1 and the carbon dioxide detection current Ip2 are constantly measured, to thereby obtain a water vapor concentration and a carbon dioxide concentration corresponding to each individual measured value based on the sensitivity characteristics identified preliminarily.

As is apparent from the above description, pumping-in of oxygen to near the surface of the first measuring inside pump electrode 51 by the first measuring pumping cell 50 and pumping-in of oxygen to near the surface of the second measuring inside pump electrode 44 by the second measuring pumping cell 47 are performed independently of each other, which allows the calculation of a water vapor concentration based on the water vapor detection current Ip1 and the calculation of a carbon dioxide concentration based on the carbon dioxide detection current Ip2 to be performed independently of each other. In other words, if the measurement gas contains any one of water vapor and carbon dioxide, the gas sensor 100 can preferably obtain its concentration.

To accurately measure a water vapor concentration and a carbon dioxide concentration in this manner, in determining and actually using sensitivity characteristics, it is necessary to reliably decompose water vapor and carbon dioxide in a measurement gas in the first internal space 20, to reliably burn hydrogen alone without burning carbon monoxide near the surface of the first measuring inside pump electrode 51, and to reliably burn carbon monoxide on the surface of the second measuring inside pump electrode 44.

To satisfy those needs, the target values of the electromotive force V0 in the first oxygen-partial-pressure detection sensor cell 60, the electromotive force V1 in the second oxygen-partial-pressure detection sensor cell 61, and the electromotive force V2 in the third oxygen-partial-pressure detection sensor cell 41 are preferably determined so as to satisfy such a relationship that the oxygen partial pressure of the second internal space 40, particularly near the surface of the first measuring inside pump electrode 51, is larger than the oxygen partial pressure of the first internal space 20 and the oxygen partial pressure near the surface of the second measuring inside pump electrode 44 is larger than the oxygen partial pressure near the surface of the first measuring inside pump electrode 51.

If a little amount of oxygen is pumped out by the main pumping cell 21 due to an excessively large target oxygen partial pressure in the first internal space 20, the generation of hydrogen and carbon monoxide through decomposition of water vapor and carbon dioxide remains insufficient, and accordingly, oxygen and further the measurement gas containing the remaining water vapor and carbon dioxide that have not been decomposed are involuntarily introduced to near the surface of the first measuring inside pump electrode 51 and further to near the surface of the second measuring inside pump electrode 44. As a result, a smaller amount of oxygen than an original amount is pumped in from near the surface of the first measuring inside pump electrode 51 and from near the surface of the second measuring inside pump electrode 44, so that the sensitivity characteristics as indicated by the broken line L1 with a small inclination, shown in Fig. 2, are obtained. When the gas sensor 100 is used in the above-mentioned partial-pressure setting, the water vapor concentration and the carbon dioxide concentration are calculated to be much smaller than actual values even if the preset sensitivity characteristics are correct.

If the target oxygen partial pressure is excessively small near the surface of the first measuring inside pump electrode 51 and near the surface of the second measuring inside pump electrode 44, oxygen is not sufficiently pumped in to those areas, and hydrogen and carbon monoxide remain. Also in this case, the sensitivity characteristics as indicated by the broken line L1 with a small inclination, shown in Fig. 2, are obtained. Needless to say, it is also difficult to accurately calculate concentrations in this case.

Meanwhile, if the oxygen partial pressure at the position near the surface of the first measuring inside pump electrode 51 is excessively large, at this position, carbon monoxide is unintentionally oxidized, though only selective oxidation of hydrogen is intended. The sensitivity characteristics at this time have an intercept and an inclination that are larger than those of the solid line L indicating actual sensitivity characteristics (the intercept value at this time is referred to as an offset current OFS2). When the gas sensor 100 is used in the above-mentioned partial-pressure setting, the water vapor concentration and the carbon dioxide concentration are calculated to be much larger than actual values even if the preset sensitivity characteristics are correct. Also for an excessively large oxygen partial pressure near the surface of the second measuring inside pump electrode 44, the offset current becomes larger than the original sensitivity characteristics, similarly to, for example, the offset current OFS2 in the sensitivity characteristics indicated by the broken line L2.

To reliably obtain the sensitivity characteristics as indicated by the solid line L of Fig. 2, it is more preferable to set the oxygen partial pressure of the first internal space 20 to 10⁻¹⁰ atm (10⁻⁵ Pa) to 10⁻³⁰ atm (10⁻²⁵ Pa), the oxygen partial pressure of the second internal space 40, particularly near the surface of the first measuring inside pump electrode 51, to 10⁻⁵ atm (10⁰ Pa) to 10⁻¹⁵ atm (10⁻¹⁰ Pa), and the oxygen partial pressure near the surface of the second measuring -10 inside pump electrode 44 to 10⁰ atm (10⁵ Pa) to 10⁻¹⁵ atm (10⁻¹⁰ Pa).

As described above, in the gas sensor according to this embodiment, the measurement gas, whose oxygen partial pressure has been set to a constantly low value (a value at which the contained water vapor and carbon dioxide are all decomposed) through the operation of the main pumping cell in the first internal space, is supplied to the second internal space. In the second internal space, particularly near the surface of the first measuring inside pump electrode 51, only the hydrogen generated through the decomposition of water vapor in the first internal space is selectively burned near the surface of the second internal space. The pump current, which flows through the first measuring pumping cell for supplying oxygen in the above-mentioned burning, has a linear relationship with the concentration of water vapor generated through burning of hydrogen, namely, the concentration of water vapor in the measurement gas introduced through the gas inlet. Based on the above, the water vapor concentration in the measurement gas can be obtained.

The measurement gas after burning of hydrogen passes through the third diffusion control part to reach near the surface of the second measuring inside pump electrode. At the surface of the second measuring inside pump electrode, carbon monoxide alone is selectively burned. The pump current, which flows through the second measuring pumping cell for supplying oxygen in the above-mentioned burning, has a linear relationship with the concentration of carbon dioxide generated through burning of carbon monoxide, namely, the concentration of carbon dioxide in the measurement gas introduced through the gas inlet. Based on the above, the carbon dioxide concentration in the measurement gas can be obtained.

The gas sensor according to this embodiment can accurately obtain a water vapor concentration and a carbon dioxide concentration irrespective of whether the measurement gas contains one or both of water vapor and carbon dioxide.

Therefore, the gas sensor according to this embodiment can accurately obtain a water vapor concentration and a carbon dioxide concentration of a measurement gas containing various gases including oxygen, water vapor, carbon dioxide, and inflammable (inert) gases, such as an exhaust gas of an internal combustion engine, for example, vehicle engine. In other words, the gas sensor according to this embodiment can be preferably used as a sensor for exhaust gas in an internal combustion engine.

### <Second Embodiment>

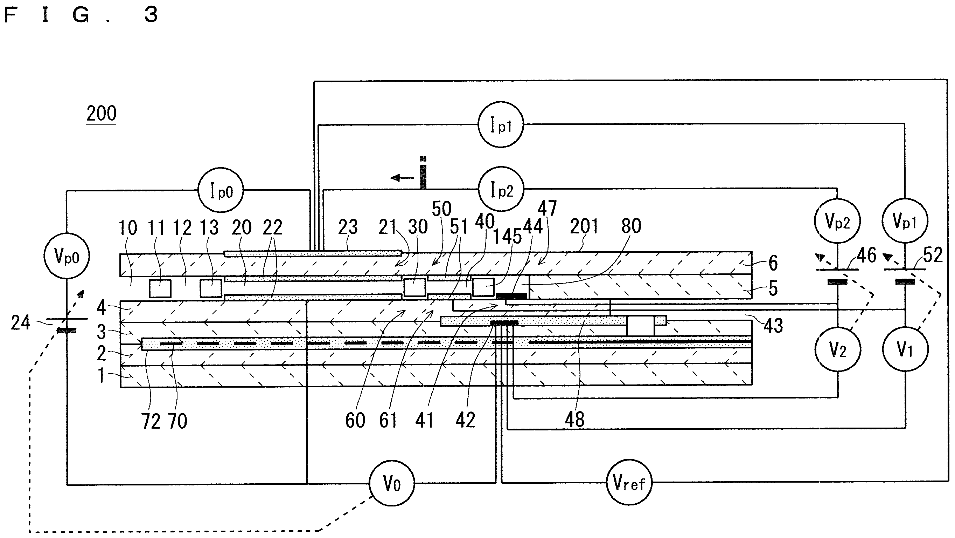

Fig. 3 is a cross-sectional view schematically showing the structure of a gas sensor 200 according to a second embodiment of the present invention. In this embodiment, the components included in the gas sensor 200 same as those of the gas sensor 100 according to the first embodiment will be denoted by the same references as those of the first embodiment, which will not be described here.

The sensor element 101 of the gas sensor 100 according to the first embodiment has two internal spaces, namely, the first internal space 20 and the second internal space 40, whereas a sensor element 201 included in the gas sensor 200 according to this embodiment has a third internal space 80 in addition to those two internal spaces. In this embodiment, a part extending from the gas inlet 10 to the third internal space 80 is referred to as a gas distribution part as well.

The third internal space 80 is an interior space provided by hollowing out the spacer layer 5, similarly to the gas inlet 10, the buffer space 12, the first internal space 20, and the second internal space 40. In other words, similarly to the buffer space 12, the first internal space 20, and the second internal space 40, the third internal space 80 is provided with its upper portion defined by the lower surface of the second solid electrolyte layer 6, its lower portion defined by the upper surface of the first solid electrolyte layer 4, and its side portion defined by the side surface of the spacer layer 5.

The second internal space 40 is provided with only the first measuring inside pump electrode 51, and the second measuring inside pump electrode 44, which is provided in the second internal space 40 in the sensor element 101, is provided in the third internal space 80. The second measuring inside pump electrode 44 is provided with its surface exposed in the third internal space 80.

Provided between the second internal space 40 and the third internal space 80 is a third diffusion control part 145 as two horizontally long slits (which are openings longitudinally extending to be vertical to the sheet of Fig. 3), similarly to the first diffusion control part 11, the second diffusion control part 30, and the fourth diffusion control part 13. Thus, the measurement gas that has reached the second internal space 40 reaches the second measuring inside pump electrode 44 provided in the third internal space 80, following the application of a predetermined diffusion resistance by the third diffusion control part 145.

Also in this embodiment, therefore, the measurement gas is introduced and water vapor and carbon dioxide are decomposed in the gas sensor as in the first embodiment, so that the water vapor concentration in the measurement gas can be obtained based on the linear relationship between the pump current flowing through the second measuring pumping cell and the water vapor concentration in the measurement gas, and that the carbon dioxide concentration in the measurement gas can be obtained based on the linear relationship between the pump current flowing through the third measuring pumping cell and the carbon dioxide concentration in the measurement gas.

Therefore, the gas sensor according to this embodiment can also accurately obtain a water vapor concentration and a carbon dioxide concentration irrespective of whether the measurement gas contains one or both of water vapor and carbon dioxide.

### <Modifications>

In the embodiments described above, the main pumping cell 21, the first measuring pumping cell 50, and the second measuring pumping cell 47 use the outside pump electrode 23 in common as an external electrode provided on the outer surface of the sensor element 101, which is not necessarily required. As described above, the main pumping cell 21, the first measuring pumping cell 50, and the second measuring pumping cell 47 may individually include a specific external electrode. Or, two external electrodes of the three pumping cells may be shared.

In the embodiments described above, the main pumping cell 21 pumps out oxygen originally existing in the measurement gas and oxygen generated through the decomposition of water vapor and carbon dioxide from the first internal space 20, whereas the first measuring pumping cell 50 and the second measuring pumping cell 47 pump in oxygen for burning hydrogen and carbon monoxide generated through the decomposition of water vapor and carbon dioxide in the first internal space 20. Thus, a difference value C=C0-C1-C2 between the concentration of oxygen to be pumped out of the first internal space 20 (referred to as C0) and the concentrations of oxygen to be pumped in to the second internal space 40 and oxygen to be pumped in to near the surface of the second measuring inside pump electrode 44 (referred to as C1 and C2, respectively) corresponds to the concentration of oxygen in the measurement gas introduced through the gas inlet 10. C0, C1, and C2 are values substantially proportional to the current values Ip0, Ip1, and Ip2, respectively, and accordingly, the concentration of oxygen in a measurement gas can be obtained from detected values of Ip0, Ip1, and Ip2 if the relationships between C0 and Ip0, between C1 and IP1, and between C2 and Ip2 are identified in advance. Or, by identifying the relationship between the value, Ip0-Ip1-Ip2, and the oxygen concentration in advance, the oxygen concentration may be identified based on each current value.

In the first embodiment described above, the second measuring inside pump electrode 44 is covered with the third diffusion control part 45, which is not necessarily required. In other words, the second measuring inside pump electrode 44 may also be provided so as to be exposed to the second internal space 40, similarly to the first measuring inside pump electrode 51. Although Fig. 1 illustrates the state in which the first measuring inside pump electrode 51 is provided up to above the second measuring inside pump electrode 44, the second measuring inside pump electrode 44 and the first measuring inside pump electrode 51 may be more apart from each other in the longitudinal direction of the sensor element 101. They are preferably apart from each other particularly in the case in which the second measuring inside pump electrode 44 is exposed to the second internal space 40.

### [Examples]

### (Example 1)

In this example, water vapor and carbon dioxide were detected with the gas sensor 100 for model gases having known concentrations of water vapor and carbon dioxide, and then the relationship between the water vapor concentration and the water vapor detection current Ip1 and the relationship between the carbon dioxide concentration and the carbon dioxide detection current Ip2 were evaluated. In such a case, the target values of V0, V1, and V2 were set such that the oxygen partial pressure of the first internal space 20 was 10⁻²⁵ atm (10⁻²⁰ Pa), the oxygen partial pressure of the second internal space 40 was 10⁻¹⁰ atm (10⁻⁵ Pa), and the oxygen partial pressure near the surface of the second measuring inside pump electrode 44 was 10⁻⁵ atm (10⁰ Pa).

Hereinafter, every concentration is expressed in percentage by volume.

The following gases were prepared as model gases.

(Gas 1) model gas for evaluating water vapor (containing no carbon dioxide):
water vapor concentration of 0% to 16% at 2% intervals, oxygen concentration of 10%, the other is nitrogen;
(Gas 2) model gas for evaluating water vapor (containing carbon dioxide):
   water vapor concentration of 0% to 16% at 2% intervals, carbon dioxide of 10%, the other is nitrogen;
(Gas 3) model gas for evaluating carbon dioxide (containing no water vapor):
   carbon dioxide concentration of 0% to 16% at 2% intervals, oxygen of 10%, the other is nitrogen;
(Gas 4) model gas for evaluating carbon dioxide (containing water vapor):
   carbon dioxide concentration 0% to 16% at 2% intervals, oxygen of 10%, the other is nitrogen.

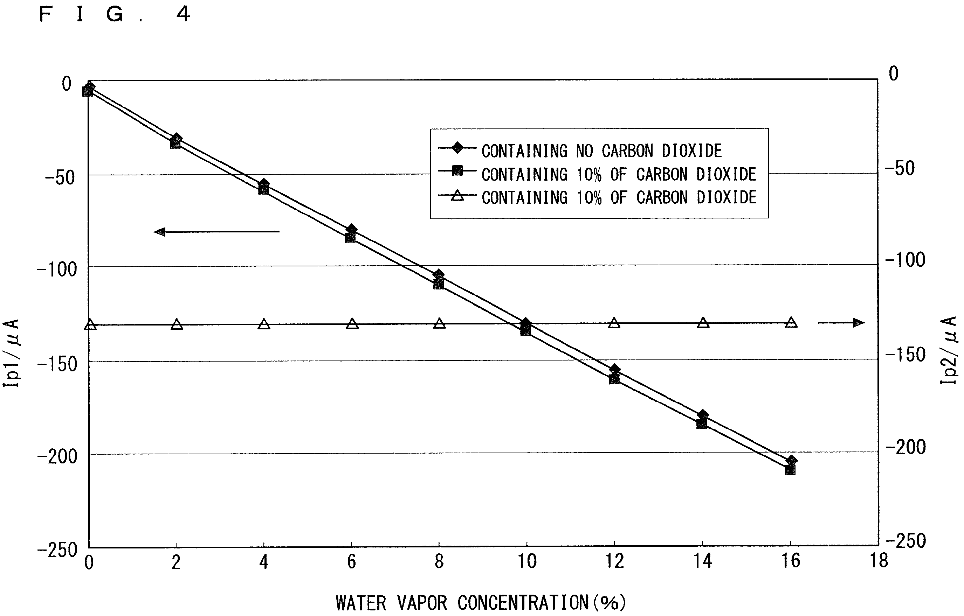

Fig. 4 is a graph showing the relationship between the water vapor concentration and the water vapor detection current Ip1 for each of (Gas 1) and (Gas 2). Fig. 4 also shows the value of the carbon dioxide detection current Ip2 for (Gas 2).

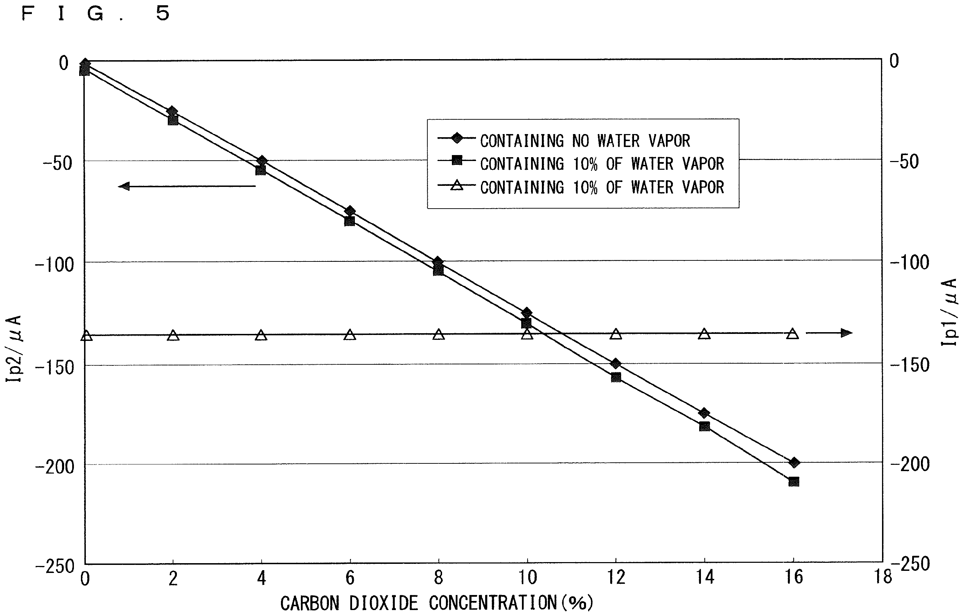

Fig. 5 is a graph showing the relationship between the carbon dioxide concentration and the carbon dioxide detection current Ip2 for each of (Gas 3) and (Gas 4). Fig. 5 also shows the value of the water vapor detection current Ip1 for (Gas 4).

As shown in Fig. 4, the water vapor detection current Ip1 was substantially proportional to the water vapor concentration for (Gas 1) containing no carbon dioxide and (Gas 2) containing carbon dioxide, and a difference between them was about 0.4% at most. The carbon dioxide detection current Ip2 for (Gas 2) was constant irrespective of the water vapor concentration.

As shown in Fig. 5, the carbon dioxide detection current Ip2 was substantially proportional to the carbon dioxide concentration for (Gas 3) containing no water vapor and (Gas 4) containing water vapor, and a difference between them was about 0.8% at most. The water vapor detection current Ip1 for (Gas 4) was constant irrespective of the carbon dioxide concentration.

The results show that with the gas sensor 100, the concentrations of water vapor and carbon dioxide in a measurement gas can be obtained based on the water vapor detection current Ip1 and the carbon dioxide detection current Ip2 with accuracy of % order at least, and further, the concentrations can be obtained irrespective of whether or not the measurement gas contains both of water vapor and carbon dioxide.

### (Example 2)

In this example, carbon dioxide in an exhaust gas was detected eight times in total in the state that the exhaust pipe of a vehicle engine was equipped with the gas sensor 100 whose sensitivity characteristics had been identified in advance, to thereby obtain the carbon dioxide detection current Ip2. The ratio of components of the exhaust gas varied every time it was detected, and thus, the detections have been performed for three days. In any case, the target values of V0, V1, and V2 were set such that the oxygen partial pressure of the first internal space 20 was 10⁻²⁵ atm, the oxygen partial pressure of the second internal space 40 was 10⁻¹⁰ atm, and the oxygen partial pressure on the surface of the second measuring inside pump electrode 44 was 10⁻⁵ atm.

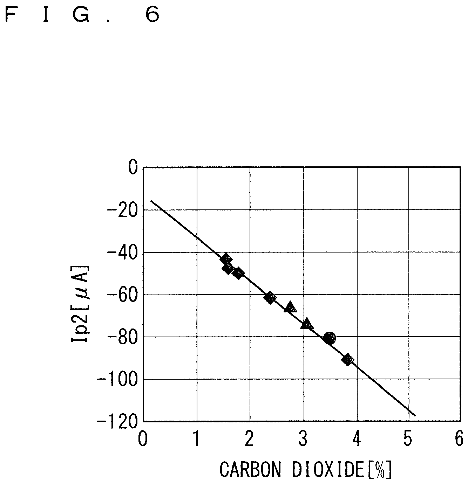

Fig. 6 is a graph showing the relationship between the calculated carbon dioxide detection current Ip2 and the carbon dioxide concentration in the above-mentioned exhaust gas obtained with an infrared absorption gas analyzer (NDIR). The graph of Fig. 6 shows data points by different marks for different detection days.

In the graph shown in Fig. 6, the data points are positioned almost linearly. The results indicate that the gas sensor 100 can be practically used as the sensor for exhaust gas.

## Claims

1. A gas sensor that has a sensor element formed of an oxygen-ion conductive solid electrolyte (4, 6) and identifies concentrations of a water vapor component and a carbon dioxide component of a measurement gas based on a current flowing through said solid electrolyte, said sensor element comprising:
a first diffusion control part (11, 13) that is in communication with the outside and applies a first diffusion resistance to said measurement gas;
a first internal space (20) that is in communication with said first diffusion control part, into which said measurement gas is introduced with said first diffusion resistance from said outside;
a second diffusion control part (30) that is in communication with said first internal space and applies a second diffusion resistance to said measurement gas;
a second internal space (40) that is in communication with said second diffusion control part, into which the measurement gas is introduced with said second diffusion resistance from said first internal space;
a main electrochemical pumping cell (21) formed of a main internal electrode (22) formed to face said first internal space, a first external electrode (23) formed on an outer surface of said sensor element, and said solid electrolyte located between said main internal electrode and said first external electrode, said main electrochemical pumping cell being configured to adjust an oxygen partial pressure of said first internal space such that substantially all of said water vapor component and said carbon dioxide component are decomposed in said first internal space;
a first measuring electrochemical pumping cell (50) formed of a first measuring internal electrode (51) formed to face said second internal space, a second external electrode (23) formed on the outer surface of said sensor element, and said solid electrolyte located between said first measuring internal electrode and said second external electrode, said first measuring electrochemical pumping cell being configured to adjust an oxygen partial pressure of said second internal space such that hydrogen generated through the decomposition of said water vapor component is selectively burned in said second internal space;
a second measuring electrochemical pumping cell (47) formed of a second measuring internal electrode (44) formed either (a) at a position in said second internal space, which position is opposite to said second diffusion control part with respect to said first measuring internal electrode, or (b) in a space (80) which is in communication with the inside of said second internal space and is opposite to said first internal space with respect to said second internal space, a third external electrode (23) formed on the outer surface of said sensor element, and said solid electrolyte located between said second measuring internal electrode and said third external electrode, said second measuring electrochemical pumping cell being configured to adjust an oxygen partial pressure near a surface of said second measuring inside pump electrode such that carbon monoxide generated through the decomposition of said carbon dioxide component is selectively burned near the surface of said second measuring inside pump electrode;
a reference gas space (43) into which a reference gas is introduced; and
a reference electrode (42) formed to face said reference gas space,
wherein said gas sensor is arranged to identify
the concentration of said water vapor component existing in said measurement gas based on the magnitude of a current flowing between said first measuring internal electrode and said second external electrode when said first measuring electrochemical pumping cell supplies oxygen to said second internal space, and
the concentration of said carbon dioxide component existing in said measurement gas based on the magnitude of a current flowing between said second measuring internal electrode and said third external electrode when said second measuring electrochemical pumping cell supplies oxygen to a surface of said second measuring internal electrode.

2. The gas sensor according to claim 1, wherein
said main electrochemical pumping cell (21) is configured to adjust, through adjustment of a first voltage to be applied between said main internal electrode and said first external electrode, the oxygen partial pressure of said first internal space such that substantially all of said water vapor component and said carbon oxide component are decomposed,
said first measuring electrochemical pumping cell (50) is configured to adjust, through adjustment of a second voltage to be applied between said first measuring internal electrode and said second external electrode, the oxygen partial pressure of said second internal space such that hydrogen generated through the decomposition of said water vapor component is all burned, and
said second measuring pumping cell (47) is configured to adjust, through adjustment of a third voltage to be applied between said second measuring internal electrode and said third external electrode, an oxygen partial pressure near the surface of said second measuring internal electrode such that carbon monoxide generated through the decomposition of said carbon oxide component is all burned.

3. The gas sensor according to claim 2, wherein
said sensor element further comprises:
a first oxygen-partial-pressure detection sensor cell (60) formed of said main internal electrode, said reference electrode, and said solid electrolyte located between said main internal electrode and said reference electrode, said first oxygen-partial-pressure detection sensor cell being configured to detect the magnitude of said first voltage;
a second oxygen-partial-pressure detection sensor cell (61) formed of said first measuring internal electrode, said reference electrode, and said solid electrolyte located between said first measuring internal electrode and said reference electrode, said second oxygen-partial-pressure detection sensor cell being configured to detect the magnitude of said second voltage; and
a third oxygen-partial-pressure detection sensor cell (41) formed of said second measuring internal electrode, said reference electrode, and said solid electrolyte located between said second measuring internal electrode and said reference electrode, said third oxygen-partial-pressure sensor cell being configured to detect the magnitude of said third voltage,
the oxygen partial pressure of said first internal space is adjusted based on a detected value of said first voltage in said first oxygen-partial-pressure detection sensor cell,
the oxygen partial pressure of said second internal space is adjusted based on a detected value of said second voltage in said second oxygen-partial-pressure detection sensor cell, and
the oxygen partial pressure near the surface of said second measuring internal electrode is adjusted based on a detected value of said third voltage in said third oxygen-partial-pressure detection sensor cell.

4. The gas sensor according to any one of claims 2 or 3, which is arranged to identify the concentrations of said water vapor component and said carbon oxide component while satisfying a relationship that
the oxygen partial pressure of said second internal space is larger than the oxygen partial pressure of said first internal space, and
the oxygen partial pressure near the surface of said second measuring internal electrode is equal to or larger than the oxygen partial pressure of said second internal space.

5. The gas sensor according to claim 4, which is arranged to identify the concentrations of said water vapor component and said carbon oxide component with
the oxygen partial pressure of said first internal space set to 10⁻¹⁰ atm (10⁻⁵ Pa) to 10⁻³⁰ atm (10⁻²⁵ Pa),
the oxygen partial pressure of said second internal space set to 10⁻⁵ atm (10⁰ Pa) to 10⁻¹⁵ atm (10⁻¹⁰ Pa), and
the oxygen partial pressure near the surface of said second measuring internal electrode set to 10⁰ atm (10⁵ Pa) to 10⁻¹⁵ atm (10⁻¹⁰ Pa).

6. The gas sensor according to claim 4 or 5, which is arranged to set a target oxygen partial pressure in said first internal space becoming smaller as the oxygen partial pressure in said measurement gas becomes larger.

7. The gas sensor according to any one of claims 1 to 6, wherein said second measuring internal electrode (44) is formed on a surface of said second internal space.

8. The gas sensor according to any one of claims 1 to 6, wherein
said sensor element further comprises:
a third diffusion control part (45, 145) that is in communication with said second internal space and applies a third diffusion resistance to said measurement gas; and
a third internal space (80) being in communication with said third diffusion control part, and
said second measuring internal electrode is formed on a surface of said third internal space.

9. The gas sensor according to any one of claims 1 to 8, wherein at least two of said first external electrode, said second external electrode, and said third external electrode are shared.

10. A method of identifying concentrations of a water vapor component and a carbon dioxide component of a measurement gas, employing a gas sensor according to claim 1 that has a sensor element formed of an oxygen-ion conductive solid electrolyte (4, 6) and identifies said concentrations of a water vapor component and a carbon dioxide component based on a current flowing through said solid electrolyte, said sensor element comprising:
a first diffusion control part (11, 13) that is in communication with the outside and applies a first diffusion resistance to said measurement gas;
a first internal space (20) that is in communication with said first diffusion control part, into which said measurement gas is introduced with said first diffusion resistance from said outside;
a second diffusion control part (30) that is in communication with said first internal space and applies a second diffusion resistance to said measurement gas;
a second internal space (40) that is in communication with said second diffusion control part, into which the measurement gas is introduced with said second diffusion resistance from said first internal space;
a main electrochemical pumping cell (21) formed of a main internal electrode (22) formed to face said first internal space, a first external electrode (23) formed on an outer surface of said sensor element, and said solid electrolyte located between said main internal electrode and said first external electrode, said main electrochemical pumping cell adjusting an oxygen partial pressure of said first internal space such that substantially all of said water vapor component and said carbon dioxide component are decomposed in said first internal space;
a first measuring electrochemical pumping cell (50) formed of a first measuring internal electrode (51) formed to face said second internal space, a second external electrode (23) formed on the outer surface of said sensor element, and said solid electrolyte located between said first measuring internal electrode and said second external electrode, said first measuring electrochemical pumping cell adjusting an oxygen partial pressure of said second internal space such that hydrogen generated through the decomposition of said water vapor component is selectively burned in said second internal space;
a second measuring electrochemical pumping cell (47) formed of a second measuring internal electrode (44) formed either (a) at a position in said second internal space, which position is opposite to said second diffusion control part with respect to said first measuring internal electrode, or (b) in a space (80) which is in communication with the inside of said second internal space and is opposite to said first internal space with respect to said second internal space, a third external electrode (23) formed on the outer surface of said sensor element, and said solid electrolyte located between said second measuring internal electrode and said third external electrode, said second measuring electrochemical pumping cell adjusting an oxygen partial pressure near a surface of said second measuring inside pump electrode such that carbon monoxide generated through the decomposition of said carbon dioxide component is selectively burned near the surface of said second measuring inside pump electrode;
a reference gas space (43) into which a reference gas is introduced; and
a reference electrode (42) formed to face said reference gas space,
wherein said gas sensor identifies
the concentration of said water vapor component existing in said measurement gas based on the magnitude of a current flowing between said first measuring internal electrode and said second external electrode when said first measuring electrochemical pumping cell supplies oxygen to said second internal space, and
the concentration of said carbon dioxide component existing in said measurement gas based on the magnitude of a current flowing between said second measuring internal electrode and said third external electrode when said second measuring electrochemical pumping cell supplies oxygen to a surface of said second measuring internal electrode.

11. The method according to claim 10, wherein
said main electrochemical pumping cell (21) adjusts, through adjustment of a first voltage to be applied between said main internal electrode and said first external electrode, the oxygen partial pressure of said first internal space such that substantially all of said water vapor component and said carbon oxide component are decomposed,
said first measuring electrochemical pumping cell (50) adjusts, through adjustment of a second voltage to be applied between said first measuring internal electrode and said second external electrode, the oxygen partial pressure of said second internal space such that hydrogen generated through the decomposition of said water vapor component is all burned, and
said second measuring pumping cell (47) adjusts, through adjustment of a third voltage to be applied between said second measuring internal electrode and said third external electrode, an oxygen partial pressure near the surface of said second measuring internal electrode such that carbon monoxide generated through the decomposition of said carbon oxide component is all burned.

12. The method according to claim 11, wherein
said sensor element further comprises:
a first oxygen-partial-pressure detection sensor cell (60) formed of said main internal electrode, said reference electrode, and said solid electrolyte located between said main internal electrode and said reference electrode, said first oxygen-partial-pressure detection sensor cell detecting the magnitude of said first voltage;
a second oxygen-partial-pressure detection sensor cell (61) formed of said first measuring internal electrode, said reference electrode, and said solid electrolyte located between said first measuring internal electrode and said reference electrode, said second oxygen-partial-pressure detection sensor cell detecting the magnitude of said second voltage; and
a third oxygen-partial-pressure detection sensor cell (41) formed of said second measuring internal electrode, said reference electrode, and said solid electrolyte located between said second measuring internal electrode and said reference electrode, said third oxygen-partial-pressure sensor cell detecting the magnitude of said third voltage,
the oxygen partial pressure of said first internal space is adjusted based on a detected value of said first voltage in said first oxygen-partial-pressure detection sensor cell,
the oxygen partial pressure of said second internal space is adjusted based on a detected value of said second voltage in said second oxygen-partial-pressure detection sensor cell, and
the oxygen partial pressure near the surface of said second measuring internal electrode is adjusted based on a detected value of said third voltage in said third oxygen-partial-pressure detection sensor cell.

13. The method according to any one of claims 11 or 12, wherein the concentrations of said water vapor component and said carbon oxide component are identified while satisfying a relationship that
the oxygen partial pressure of said second internal space is larger than the oxygen partial pressure of said first internal space, and
the oxygen partial pressure near the surface of said second measuring internal electrode is equal to or larger than the oxygen partial pressure of said second internal space.

14. The method according to claim 13, wherein the concentrations of said water vapor component and said carbon oxide component are identified with
the oxygen partial pressure of said first internal space set to 10⁻¹⁰ atm (10⁻⁵ Pa) to 10⁻³⁰ atm (10⁻²⁵ Pa),
the oxygen partial pressure of said second internal space set to 10⁻⁵ atm (10⁰ Pa) to 10⁻¹⁵ atm (10⁻¹⁰ Pa), and
the oxygen partial pressure near
the surface of said second measuring internal electrode set to 10⁰ atm (10⁵ Pa) to 10⁻¹⁵ atm (10⁻¹⁰ Pa).

15. The method according to claim 13 or 14, which is arranged to set a target oxygen partial pressure in said first internal space is set to become smaller as the oxygen partial pressure in said measurement gas becomes larger.

## Patentansprüche

1. Gassensor, der ein Sensorelement aufweist, das aus einem sauerstoffionenleitenden Festelektrolyten (4, 6) gebildet ist und Konzentrationen einer Wasserdampfkomponente und einer Kohlendioxidkomponente eines Messgases auf Basis eines Stroms, der durch den Elektrolyten hindurchfließt, ermittelt, wobei das Sensorelement Folgendes umfasst:
einen ersten Diffusionssteuerungsabschnitt (11, 13), der in Kommunikation mit der äußeren Umgebung ist und dem Messgas einen ersten Diffusionswiderstand entgegensetzt;
einen ersten Innenraum (20), der in Kommunikation mit dem ersten Diffusionssteuerungsabschnitt ist, in den das Messgas mit dem ersten Diffusionswiderstand von der äußeren Umgebung eingebracht wird;
einen zweiten Diffusionssteuerungsabschnitt (30), der in Kommunikation mit dem ersten Innenraum ist und dem Messgas einen zweiten Diffusionswiderstand entgegensetzt;
einen zweiten Innenraum (40), der in Kommunikation mit dem zweiten Diffusionssteuerungsabschnitt ist, in den das Messgas mit dem zweiten Diffusionswiderstand aus dem ersten Innenraum eingebracht wird;
eine elektrochemische Haupt-Pumpzelle (21), die aus einer Haupt-Innenelektrode (22), die ausgebildet ist, dem ersten Innenraum zugewandt zu sein, einer ersten Außenlektrode (23), die auf einer äußeren Oberfläche des Sensorelements ausgebildet ist, und dem Festelektrolyten, der zwischen der Haupt-Innenelektrode und der ersten Außenelektrode angeordnet ist, gebildet ist, wobei die elektrochemische Haupt-Pumpzelle konfiguriert ist, einen Sauerstoffpartialdruck des ersten Innenraums derart einzustellen, dass die Wasserdampfkomponente und die Kohlendioxidkomponente im Wesentlichen vollständig im ersten Innenraum zersetzt werden;
eine erste elektrochemische Mess-Pump-Zelle (50), die aus einer ersten Mess-Innenelektrode (51), die ausgebildet ist, dem zweiten Innenraum zugewandt zu sein, einer zweiten Außenelektrode (23), die auf der äußeren Oberfläche des Sensorelements ausgebildet ist, und dem Festelektrolyten, der zwischen der ersten Mess-Innenelektrode der zweiten Außenelektrode angeordnet ist, gebildet ist, wobei die erste elektrochemische Mess-Pump-Zelle konfiguriert ist, einen Sauerstoffpartialdruck des zweiten Innenraums derart einzustellen, dass der Wasserstoff, der durch die Zersetzung der Wasserdampfkomponente erzeugt wird, im zweiten Innenraum wahlweise verbrannt wird;
eine zweite elektrochemische Mess-Pump-Zelle (47), die aus einer zweiten Mess-Innenelektrode (44) entweder (a) an einer Stelle im zweiten Innenraum, wobei die Stelle dem zweiten Diffusionssteuerungsabschnitt mit Bezug auf die erste Mess-Innenelektrode gegenüberliegt, oder (b) in einem Raum (80), der in Kommunikation mit dem Inneren des zweiten Innenraums ist und dem ersten Innenraum mit Bezug auf den zweiten Innenraum gegenüberliegt, ausgebildet ist, einer dritten Außenelektrode (23), die auf der äußeren Oberfläche des Sensorelements ausgebildet ist, und dem Festelektrolyten, der zwischen der zweiten Mess-Innenelektrode und der dritten Außenelektrode angeordnet ist, gebildet ist, wobei die zweite elektrochemische Mess-Pump-Zelle konfiguriert ist, einen Sauerstoffpartialdruck nahe einer Oberfläche der zweiten Innenmessungs-Pump-Zelle derart einzustellen, dass das durch die Zersetzung der Kohlendioxidkomponente erzeugte Kohlenmonoxid nahe der Oberfläche der zweiten Innenmessungs-Pumpelektrode wahlweise verbrannt wird;
einen Referenzgasraum (43), in den ein Referenzgas eingebracht wird; und
eine Referenzelektrode (42), die ausgebildet ist, dem Referenzgasraum zugewandt zu sein,
worin der Gassensor angeordnet ist, Folgendes zu ermitteln:
die Konzentration der Wasserdampfkomponente, die in dem Messgas auf Basis der Größe eines Stroms, der zwischen der ersten Mess-Innenelektrode und der zweiten Außenelektrode fließt, vorhanden ist, wenn die erste elektrochemische Mess-Pump-Zelle dem zweiten Innenraum Sauerstoff zuführt, und
die Konzentration der Kohlendioxidkomponente, die in dem Messgas auf Basis der Größe eines Stroms, der zwischen der zweiten Mess-Innenelektrode und der dritten Außenelektrode fließt, vorhanden ist, wenn die zweite elektrochemische Mess-Pump-Zelle einer Oberfläche der zweiten Mess-Innenelektrode Sauerstoff zuführt.

2. Gassensor gemäß Anspruch 1, worin
die elektrochemische Haupt-Pumpzelle (21) konfiguriert ist, durch Einstellung einer ersten, zwischen der Haupt-Innenelektrode und der ersten Außenelektrode anzulegenden Spannung den Sauerstoffpartialdruck des ersten Innenraums derart einzustellen, dass die Wasserdampfkomponente und die Kohlenoxidkomponente im Wesentlichen vollständig zersetzt werden,
die erste elektrochemische Mess-Pump-Zelle (50) konfiguriert ist, durch Einstellung einer zweiten, zwischen der ersten Mess-Innenelektrode und der zweiten Außenelektrode anzulegenden Spannung den Sauerstoffpartialdruck des zweiten Wasserdampfinnenraums derart zu einzustellen, dass der durch die Zersetzung der Wasserdampfkomponente erzeugte Wasserstoff vollständig verbrannt wird, und
die zweite Mess-Pump-Zelle (47) konfiguriert ist, durch Einstellung einer dritten, zwischen der zweiten Mess-Innenelektrode und der dritten Außenelektrode anzulegenden Spannung einen Sauerstoffpartialdruck nahe der Oberfläche der zweiten Mess-Innenelektrode derart einzustellen, dass das durch die Zersetzung der Kohlenoxidkomponente erzeugte Kohlenmonoxid vollständig verbrannt wird.

3. Gassensor gemäß Anspruch 2, worin
das Sensorelement Folgendes umfasst:
eine erste Sauerstoffpartialdruckdetektionssensorzelle (60), die aus der Haupt-Innenelektrode, der Referenzelektrode und dem Festelektrolyten, der zwischen der Haupt-Innenelektrode und der Referenzelektrode angeordnet ist, gebildet ist, wobei die erste Sauerstoffpartialdruckdetektionssensorzelle konfiguriert ist, die Größe der ersten Spannung zu detektieren;
eine zweite Sauerstoffpartialdruckdetektionssensorzelle (61), die aus der ersten Mess-Innenelektrode, der Referenzelektrode und dem Festelektrolyten, der zwischen der ersten Mess-Innenelektrode der Referenzelektrode angeordnet ist, gebildet ist, wobei die zweite Sauerstoffpartialdruckdetektionssensorzelle konfiguriert ist, die Größe der zweiten Spannung zu detektieren; und
eine dritte Sauerstoffpartialdruckdetektionssensorzelle (41), die aus der zweiten Mess-Innenelektrode, der Referenzelektrode und dem Festelektrolyten, der zwischen der zweiten Mess-Innenelektrode und der Referenzelektrode angeordnet ist, gebildet ist, wobei die dritte Sauerstoffpartialdrucksensorzelle konfiguriert ist, die Größe der dritten Spannung zu detektieren,
worin der Sauerstoffpartialdruck des ersten Innenraums auf Basis eines detektierten Werts der ersten Spannung in der ersten Sauerstoffpartialdruckdetektionssensorzelle eingestellt wird,
worin der Sauerstoffpartialdruck des zweiten Innenraums auf Basis eines detektierten Werts der zweiten Spannung in der zweiten Sauerstoffpartialdruckdetektionssensorzelle eingestellt wird, und
worin der Sauerstoffpartialdruck nahe der Oberfläche der zweiten Mess-Innenelektrode auf Basis eines detektierten Werts der dritten Spannung in der dritten Sauerstoffpartialdruckdetektionssensorzelle eingestellt wird.

4. Gassensor gemäß einem der Ansprüche 2 oder 3, der angeordnet ist, die Konzentrationen der Wasserdampfkomponente und der Kohlenoxidkomponente zu ermitteln, während eine Beziehung erfüllt wird, dass
der Sauerstoffpartialdruck des zweiten Innenraums größer als der Sauerstoffpartialdruck des ersten Innenraums ist, und
dass der Sauerstoffpartialdruck nahe der Oberfläche der zweiten Mess-Innenelektrode gleich oder größer als der Sauerstoffpartialdruck des zweiten Innenraums ist.

5. Gassensor gemäß Anspruch 4, der angeordnet ist, die Konzentrationen der Wasserdampfkomponente und der Kohlendioxidkomponente zu ermitteln, worin der Sauerstoffpartialdruck des ersten Innenraums auf 10⁻¹⁰ atm (10⁻⁵ Pa) bis 10⁻³⁰ atm (10⁻²⁵ Pa) eingestellt ist,
der Sauerstoffpartialdruck des zweiten Innenraums auf 10⁻⁵ atm (10⁰ Pa) bis 10⁻¹⁵ atm (10⁻¹⁰ Pa) eingestellt ist, und
der Sauerstoffpartialdruck nahe der Oberfläche der zweiten Mess-Innenelektrode auf 10⁰ atm (10⁵ Pa) bis 10⁻¹⁵ atm (10⁻¹⁰ Pa) eingestellt ist.

6. Gassensor gemäß Anspruch 4 oder 5, der angeordnet ist, einen Ziel-Sauerstoffpartialdruck in dem ersten Innenraum einzustellen, der kleiner wird, wenn der Sauerstoffpartialdruck im Messgas größer wird.

7. Gassensor gemäß einem der Ansprüche 1 bis 6, worin die zweite Mess-Innenelektrode (44) auf einer Oberfläche des zweiten Innenraums ausgebildet ist.

8. Gassensor gemäß einem der Ansprüche 1 bis 6, worin das Sensorelement ferner Folgendes umfasst:
einen dritten Diffusionssteuerungsabschnitt (45, 145), der in Kommunikation mit dem zweiten Innenraum ist und dem Messgas einen dritten Diffusionswiderstand entgegensetzt; und
einen dritten Innenraum (80), der in Kommunikation mit dem dritten Diffusionssteuerungsabschnitt ist, und
worin die zweite Mess-Innenelektrode auf einer Oberfläche des dritten Innenraums ausgebildet ist.

9. Gassensor gemäß einem der Ansprüche 1 bis 8, worin mindestens zwei der ersten Außenelektrode, der zweiten Außenelektrode und der dritten Außenelektrode gemeinsam benutzt werden.

10. Verfahren für das Ermitteln von Konzentrationen einer Wasserdampfkomponente und einer Kohlendioxidkomponente eines Messgases unter Anwendung eines Gassensors,
der ein Sensorelement aufweist, das aus einem sauerstoffionenleitenden Festelektrolyten (4, 6) gebildet ist und die Konzentrationen einer Wasserdampfkomponente und einer Kohlendioxidkomponente auf Basis eines Stroms ermittelt, der durch den Festelektrolyten hindurchfließt, wobei das Sensorelement Folgendes umfasst:
einen ersten Diffusionssteuerungsabschnitt (11, 13), der in Kommunikation mit der äußeren Umgebung ist und dem Messgas einen ersten Diffusionswiderstand entgegensetzt;
einen ersten Innenraum (20), der in Kommunikation mit dem ersten Diffusionssteuerungsabschnitt ist, in den das Messgas mit dem ersten Diffusionswiderstand von der äußeren Umgebung eingebracht wird;
einen zweiten Diffusionssteuerungsabschnitt (30), der in Kommunikation mit dem ersten Innenraum ist und dem Messgas einen zweiten Diffusionswiderstand entgegensetzt;
einen zweiten Innenraum (40), der in Kommunikation mit dem zweiten Diffusionssteuerungsabschnitt ist, in den das Messgas mit dem zweiten Diffusionswiderstand von dem ersten Innenraum eingebracht wird;
eine elektrochemische Haupt-Pumpzelle (21), die aus einer Haupt-Innenelektrode (22), die ausgebildet ist, dem ersten Innenraum zugewandt zu sein, einer ersten Außenelektrode (23), die auf einer äußeren Oberfläche des Sensorelements ausgebildet ist, und dem Festelektrolyten, der zwischen der Haupt-Innenelektrode und der ersten Außenelektrode angeordnet ist, gebildet ist, wobei die elektrochemische Haupt-Pumpzelle einen Sauerstoffpartialdruck des ersten Innenraums derart einstellt, dass die Wasserdampfkomponente und die Kohlendioxidkomponente im ersten Innenraum im Wesentlichen vollständig zersetzt werden;
eine erste elektrochemische Mess-Pump-Zelle (50), die aus einer ersten Mess-Innenelektrode (51), die ausgebildet ist, dem zweiten Innenraum zugewandt zu sein, einer zweiten Außenelektrode (23), die auf der äußeren Oberfläche des Sensorelements ausgebildet ist, und dem Festelektrolyten, der zwischen der ersten Mess-Innenelektrode und der zweiten Außenelektrode angeordnet ist, gebildet ist, wobei die erste elektrochemische Mess-Pump-Zelle einen Sauerstoffpartialdruck des zweiten Innenraums derart einstellt, dass der durch die Zersetzung der Wasserdampfkomponente erzeugte Wasserstoff im zweiten Innenraum wahlweise verbrannt wird;
eine zweite elektrochemische Mess-Pump-Zelle (47), die aus einer zweiten Mess-Innenelektrode (44), die entweder (a) an einer Stelle in dem zweiten Innenraum, wobei die Stelle dem zweiten Diffusionssteuerungsabschnitt mit Bezug auf die erste Mess-Innenelektrode gegenüberliegt, oder (b) in einem Raum (80), der in Kommunikation mit dem Inneren des zweiten Innenraums ist und dem ersten Innenraum mit Bezug auf den zweiten Innenraum gegenüberliegt, ausgebildet ist, einer dritten Außenelektrode (23), die auf einer äußeren Oberfläche des Sensorelements ausgebildet ist, und dem Festelektrolyten, der zwischen der zweiten Mess-Innenelektrode und der dritten Außenelektrode angeordnet ist, gebildet ist, wobei die zweite elektrochemische Mess-Pump-Zelle einen Sauerstoffpartialdruck nahe einer Oberfläche der zweiten Innenmessungspumpelektrode derart einstellt, dass das durch die Zersetzung der Kohlendioxidkomponente erzeugte Kohlenmonoxid nahe der Oberfläche der zweiten Innenmessungspumpelektrode wahlweise verbrannt wird;
ein Referenzgasraum (43), in den ein Referenzgas eingebracht wird; und
eine Referenzelektrode (42), die ausgebildet ist, dem Referenzgasraum zugewandt zu sein,
worin der Gassensor Folgendes ermittelt:
die Konzentration der Wasserdampfkomponente, die in dem Messgas auf Basis der Größe eines Stroms vorhanden ist, der zwischen der ersten Mess-Innen-Elektrode und der zweiten Außenelektrode fließt, zu ermitteln, wenn die erste elektrochemische Mess-Pump-Zelle dem zweiten Innenraum Sauerstoff zuführt; und
die Konzentration der Kohlendioxidkomponente, die in dem Messgas auf Basis der Größe eines Stroms vorhanden ist, der zwischen der zweiten Mess-Innenelektrode und der dritten Außenelektrode fließt, zu ermitteln, wenn die zweite elektrochemische Mess-Pump-Zelle einer Oberfläche der zweiten Mess-Innenelektrode Sauerstoff zuführt.

11. Verfahren gemäß Anspruch 10, worin
die elektrochemische Haupt-Pumpzelle (21) durch Einstellung einer ersten, zwischen der Haupt-Innenelektrode und der ersten Außenelektrode anzulegenden Spannung den Sauerstoffpartialdruck des ersten Innenraums derart einstellt, dass die Wasserdampfkomponente und die Kohlenoxidkomponente im Wesentlichen vollständig zersetzt werden,
die erste elektrochemische Mess-Pump-Zelle (50) durch Einstellung einer zweiten, zwischen der ersten Mess-Innenelektrode und der zweiten Außenelektrode anzulegenden Spannung den Sauerstoffpartialdruck des zweiten Innenraums derart einstellt, dass der durch die Zersetzung der Wasserdampfkomponente erzeugte Wasserstoff zur Gänze verbrannt wird, und
worin die zweite Mess-Pump-Zelle (47) durch Einstellung einer dritten, zwischen der zweiten Mess-Innenelektrode und der dritten Außenelektrode anzulegenden Spannung einen Sauerstoffpartialdruck nahe der Oberfläche der zweiten Mess-Innenelektrode derart einstellt, dass das durch die Zersetzung der Kohlenoxidkomponente erzeugte Kohlenmonoxid zur Gänze verbrannt wird.

12. Verfahren gemäß Anspruch 11, worin
das Sensorelement ferner Folgendes umfasst:
eine erste Sauerstoffpartialdruckdetektionssensorzelle (60), die aus der Haupt-Innenelektrode, der Referenzelektrode und dem Festelektrolyten, der zwischen der Haupt-Innenelektrode und der Referenzelektrode angeordnet ist, gebildet ist, wobei die erste Sauerstoffpartialdruckdetektionssensorzelle die Größe der ersten Spannung detektiert;
eine zweite Sauerstoffpartialdruckdetektionszelle (61), die aus der ersten Mess-Innenelektrode, der Referenzelektrode und dem Festelektrolyten, der zwischen der ersten Mess-Innenelektrode und der Referenzelektrode angeordnet ist, gebildet ist, wobei die zweite Sauerstoffpartialdruckdetektionszelle die Größe der zweiten Spannung detektiert; und
eine dritte Sauerstoffpartialdruckdetektionssensorzelle (41), die aus der zweiten Mess-Innenelektrode, der Referenzelektrode und dem Festelektrolyten, der zwischen der zweiten Mess-Innenelektrode und der Referenzelektrode angeordnet ist, gebildet ist, wobei die dritte Sauerstoffpartialdrucksensorzelle die Größe der dritten Spannung detektiert,
worin der Sauerstoffpartialdruck des ersten Innenraums auf Basis eines detektierten Werts der ersten Spannung in der ersten Sauerstoffpartialdruckdetektionssensorzelle eingestellt wird,
worin der Sauerstoffpartialdruck des zweiten Innenraums auf Basis eines detektierten Werts der zweiten Spannung in der zweiten Sauerstoffpartialdruckdetektionssensorzelle eingestellt wird, und
worin der Sauerstoffpartialdruck nahe der Oberfläche der zweiten Mess-Innenelektrode auf Basis eines detektierten Werts der dritten Spannung in der Sauerstoffpartialdruckdetektionssensorzelle eingestellt wird.

13. Verfahren gemäß einem der Ansprüche 11 oder 12, worin die Konzentrationen der Wasserdampfkomponente und der Kohlenoxidkomponente ermittelt werden, während eine Beziehung erfüllt wird, dass der Sauerstoffpartialdruck des zweiten Innenraums größer als der Sauerstoffpartialdruck des ersten Innenraums ist, und dass der Sauerstoffpartialdruck nahe der Oberfläche der zweiten Mess-Innenelektrode gleich oder größer als der Sauerstoffpartialdruck des zweiten Innenraums ist.

14. Verfahren gemäß Anspruch 13, worin die Konzentrationen der Wasserdampfkomponente und der Kohlenoxidkomponente ermittelt werden, worin der Sauerstoffpartialdruck des ersten Innenraums auf 10⁻¹⁰ atm (10⁻⁵ Pa) bis 10⁻³⁰ atm (10⁻²⁵ Pa) eingestellt ist,
der Sauerstoffpartialdruck des zweiten Innenraums auf 10⁻⁵ atm (10⁰ Pa) bis 10⁻¹⁵ atm (10⁻¹⁰ Pa) eingestellt ist, und der Sauerstoffpartialdruck nahe der Oberfläche der zweiten Mess-Innenelektrode auf 10° atm (10⁵ Pa) bis 10⁻¹⁵ atm (10⁻¹⁰ Pa) eingestellt ist.

15. Verfahren gemäß Anspruch 13 oder 14, das angeordnet ist, einen Ziel-Sauerstoffpartialdruck in dem ersten Innenraum einzustellen, der so eingestellt ist, dass er geringer wird, wenn der Sauerstoffpartialdruck im Messgas größer wird.

## Revendications

1. Capteur de gaz qui possède un élément capteur formé d'un électrolyte solide conducteur d'ions oxygène (4, 6) et identifie les concentrations d'un composant de vapeur d'eau et d'un composant de dioxyde de carbone d'un gaz de mesure sur la base d'un courant passant à travers ledit électrolyte solide, ledit élément capteur comprenant :
une première partie de contrôle de diffusion (11, 13) qui est en communication avec l'extérieur et applique une première résistance de diffusion audit gaz de mesure ;
un premier espace interne (20) qui est en communication avec ladite première partie de contrôle de diffusion, dans lequel est introduit ledit gaz de mesure avec ladite première résistance de diffusion depuis ledit extérieur ;
une deuxième partie de contrôle de diffusion (30) qui est en communication avec ledit premier espace interne et applique une deuxième résistance de diffusion audit gaz de mesure ;
un deuxième espace interne (40) qui est en communication avec ladite deuxième partie de contrôle de diffusion, dans lequel est introduit le gaz de mesure avec ladite deuxième résistance de diffusion à partir dudit premier espace interne ;
une cellule de pompage électrochimique principale (21) formée d'une électrode interne principale (22) formée de sorte à faire face audit premier espace interne, d'une première électrode externe (23) formée sur une surface externe dudit élément capteur, et dudit électrolyte solide situé entre ladite électrode interne principale et ladite première électrode externe, ladite cellule de pompage électrochimique étant configurée pour ajuster une pression partielle d'oxygène dudit premier espace interne de telle sorte que sensiblement tout ledit composant de vapeur d'eau et ledit composant de dioxyde de carbone sont décomposés dans ledit premier espace interne ;
une première cellule de pompage électrochimique de mesure (50) formée d'une première électrode interne de mesure (51) formée de sorte à faire face audit deuxième espace interne, d'une deuxième électrode externe (23) formée sur la surface externe dudit élément capteur, et dudit électrolyte solide situé entre ladite première électrode interne de mesure et ladite deuxième électrode externe, ladite première cellule de pompage électrochimique de mesure étant configurée pour ajuster une pression partielle d'oxygène dudit deuxième espace interne de telle sorte que l'hydrogène généré par le biais de la décomposition dudit composant de vapeur d'eau est brûlé sélectivement dans ledit deuxième espace interne ;
une seconde cellule de pompage électrochimique de mesure (47) formée d'une seconde électrode interne de mesure (44) formée soit (a) à une position dans ledit deuxième espace interne, laquelle position est opposée à ladite deuxième partie de contrôle de diffusion par rapport à ladite première électrode interne de mesure, soit (b) dans un espace (80) qui est en communication avec l'intérieur dudit deuxième espace interne et est opposé audit premier espace interne par rapport audit deuxième espace interne, d'une troisième électrode externe (23) formée sur la surface externe dudit élément capteur, et dudit électrolyte solide situé entre ladite deuxième électrode interne de mesure et ladite troisième électrode externe, ladite seconde cellule de pompage électrochimique de mesure étant configurée pour ajuster une pression partielle d'oxygène près d'une surface de ladite seconde mesure à l'intérieur de l'électrode de pompe de telle sorte que le monoxyde de carbone généré par le biais de la décomposition dudit composant de dioxyde de carbone est brûlé sélectivement près de la surface de ladite seconde électrode de mesure à l'intérieur de la pompe ;
un espace de gaz de référence (43) dans lequel est introduit un gaz de référence ; et
une électrode de référence (42) formée de sorte à faire face audit espace de gaz de référence,
dans lequel ledit capteur de gaz est agencé pour identifier
la concentration dudit composant de vapeur d'eau existant dans ledit gaz de mesure sur la base de l'amplitude d'un courant passant entre ladite première électrode interne de mesure et ladite deuxième électrode externe lorsque ladite première cellule de pompage électrochimique de mesure fournit de l'oxygène audit deuxième espace interne, et
la concentration dudit composant de dioxyde de carbone existant dans ledit gaz de mesure sur la base de l'amplitude d'un courant passant entre ladite deuxième électrode interne de mesure et ladite troisième électrode externe lorsque ladite seconde cellule de pompage électrochimique de mesure fournit de l'oxygène à une surface de ladite deuxième électrode interne de mesure.

2. Capteur de gaz selon la revendication 1, dans lequel
ladite cellule de pompage électrochimique principale (21) est configurée pour ajuster, par le biais de l'ajustement d'une première tension devant être appliquée entre ladite électrode interne principale et ladite première électrode externe, la pression partielle d'oxygène dudit premier espace interne de telle sorte que sensiblement tout ledit composant de vapeur d'eau et ledit composant d'oxyde de carbone sont décomposés,
ladite première cellule de pompage électrochimique de mesure (50) est configurée pour ajuster, par le biais de l'ajustement d'une deuxième tension devant être appliquée entre ladite première électrode interne de mesure et ladite deuxième électrode externe, la pression partielle d'oxygène dudit deuxième espace interne de telle sorte que l'hydrogène généré par le biais de la décomposition dudit composant de vapeur d'eau est brûlé en totalité, et
ladite seconde cellule de pompage de mesure (47) est configurée pour ajuster, par le biais de l'ajustement d'une troisième tension devant être appliquée entre ladite seconde électrode interne de mesure et ladite troisième électrode externe, une pression partielle d'oxygène près de la surface de ladite seconde électrode interne de mesure de telle sorte que le monoxyde de carbone généré par le biais de la décomposition dudit composant d'oxyde de carbone est brûlé en totalité.

3. Capteur de gaz selon la revendication 2, dans lequel ledit élément capteur comprend en outre :
une première cellule de capteur de détection de pression partielle d'oxygène (60) formée de ladite électrode interne principale, de ladite électrode de référence et dudit électrolyte solide situé entre ladite électrode interne principale et ladite électrode de référence, ledit premier capteur de détection de pression partielle d'oxygène étant configuré pour détecter l'amplitude de ladite première tension ;
une seconde cellule de capteur de détection de pression partielle d'oxygène (61) formée de ladite première électrode interne de mesure, de ladite électrode de référence et dudit électrode solide situé entre ladite première électrode interne de mesure et ladite électrode de référence, ladite cellule de capteur de détection de pression partielle d'oxygène étant configurée pour détecter l'amplitude de ladite deuxième tension ; et
une troisième cellule de capteur de détection de pression partielle d'oxygène (41) formée de ladite seconde électrode interne de mesure, de ladite électrode de référence et dudit électrolyte solide situé entre ladite seconde électrode interne de mesure et ladite électrode de référence, ladite troisième cellule de capteur de pression partielle d'oxygène étant configurée pour détecter l'amplitude de ladite troisième tension,
la pression partielle d'oxygène dudit premier espace interne est ajustée sur la base d'une valeur détectée de ladite première tension dans ladite première cellule de capteur de détection de pression partielle d'oxygène,
la pression partielle d'oxygène dudit deuxième espace interne est ajustée sur la base d'une valeur détectée de ladite deuxième tension dans ladite seconde cellule de capteur de détection de pression partielle d'oxygène, et
la pression partielle d'oxygène près de la surface de ladite seconde électrode interne de mesure est ajustée sur la base d'une valeur détectée de ladite troisième tension dans ladite troisième cellule de capteur de détection de pression partielle d'oxygène.

4. Capteur de gaz selon l'une quelconque des revendications 2 ou 3, qui est conçu pour identifier les concentrations dudit composant de vapeur d'eau et dudit composant d'oxyde de carbone tout en satisfaisant une relation selon laquelle
la pression partielle d'oxygène dudit deuxième espace interne est plus grande que la pression partielle d'oxygène dudit premier espace interne, et
la pression partielle d'oxygène près de la surface de ladite seconde électrode interne de mesure est supérieure ou égale à la pression partielle d'oxygène dudit deuxième espace interne.

5. Capteur de gaz selon la revendication 4, qui est conçu pour identifier les concentrations dudit composant de vapeur d'eau et dudit composant d'oxyde de carbone, la pression partielle d'oxygène dudit premier espace interne étant définie à une valeur de 10⁻¹⁰ atm (10⁻⁵ Pa) à 10⁻³⁰ atm (10⁻²⁵ Pa),
la pression partielle d'oxygène dudit deuxième espace interne étant définie à une valeur de 10⁻⁵ atm (10° Pa) à 10⁻¹⁵ atm (10⁻¹⁰ Pa), et
la pression partielle d'oxygène près de la surface de ladite seconde électrode interne de mesure étant définie à une valeur de 10⁰ atm (10⁵ Pa) à 10⁻¹⁵ atm (10⁻¹⁰ Pa).

6. Capteur de gaz selon la revendication 4 ou 5, qui est conçu pour définir une pression partielle d'oxygène cible dans ledit premier espace interne qui devient plus petite au fur et à mesure que la pression partielle d'oxygène dans ledit gaz de mesure devient plus grande.

7. Capteur de gaz selon l'une quelconque des revendications 1 à 6, dans lequel ladite seconde électrode interne de mesure (44) est formée sur une surface dudit deuxième espace interne.

8. Capteur de gaz selon l'une quelconque des revendications 1 à 6, dans lequel ledit élément capteur comprend en outre :
une troisième partie de contrôle de diffusion (45, 145) qui est en communication avec ledit deuxième espace interne et applique une troisième résistance de diffusion audit gaz de mesure ; et
un troisième espace interne (80) en communication avec ladite troisième partie de contrôle de diffusion, et
ladite seconde électrode interne de mesure est formée sur une surface dudit troisième espace interne.

9. Capteur de gaz selon l'une quelconque des revendications 1 à 8, dans lequel au moins deux de ladite première électrode externe, de ladite deuxième électrode externe et de ladite troisième électrode externe sont partagées.

10. Procédé d'identification de concentrations d'un composant de vapeur d'eau et d'un composant de dioxyde de carbone d'un gaz de mesure, employant un capteur de gaz selon la revendication 1 qui possède un élément capteur formé d'un électrolyte solide conducteur d'ions oxygène (4, 6) et identifie lesdites concentrations d'un composant de vapeur d'eau et d'un composant de dioxyde de carbone sur la base d'un courant passant à travers ledit électrolyte solide, ledit élément capteur comprenant :
une première partie de contrôle de diffusion (11, 13) qui est en communication avec l'extérieur et applique une première résistance de diffusion audit gaz de mesure ;
un premier espace interne (20) qui est en communication avec ladite première partie de contrôle de diffusion, dans lequel est introduit ledit gaz de mesure avec ladite première résistance de diffusion depuis ledit extérieur ;
une deuxième partie de contrôle de diffusion (30) qui est en communication avec ledit premier espace interne et applique une deuxième résistance de diffusion audit gaz de mesure ;
un deuxième espace interne (40) qui est en communication avec ladite deuxième partie de contrôle de diffusion, dans lequel est introduit le gaz de mesure avec ladite deuxième résistance de diffusion à partir dudit premier espace interne ;
une cellule de pompage électrochimique principale (21) formée d'une électrode interne principale (22) formée de sorte à faire face audit premier espace interne, d'une première électrode externe (23) formée sur une surface externe dudit élément capteur, et dudit électrolyte solide situé entre ladite électrode interne principale et ladite première électrode externe, ladite cellule de pompage électrochimique principale ajustant une pression partielle d'oxygène dudit premier espace interne de telle sorte que sensiblement tout ledit composant de vapeur d'eau et ledit composant de dioxyde de carbone sont décomposés dans ledit premier espace interne ;
une première cellule de pompage électrochimique de mesure (50) formée d'une première électrode interne de mesure (51) formée de sorte à faire face audit deuxième espace interne, d'une deuxième électrode externe (23) formée sur la surface externe dudit élément capteur, et dudit électrolyte solide situé entre ladite première électrode interne de mesure et ladite deuxième électrode externe, ladite première cellule de pompage électrochimique de mesure ajustant une pression partielle d'oxygène dudit deuxième espace interne de telle sorte que l'hydrogène généré par le biais de la décomposition dudit composant de vapeur d'eau est brûlé sélectivement dans ledit deuxième espace interne ;
une seconde cellule de pompage électrochimique de mesure (47) formée d'une seconde électrode interne de mesure (44) formée soit (a) à une position dans ledit deuxième espace interne, laquelle position est opposée à ladite deuxième partie de contrôle de diffusion par rapport à ladite première électrode interne de mesure, soit (b) dans un espace (80) qui est en communication avec l'intérieur dudit deuxième espace interne et est opposé audit premier espace interne par rapport audit deuxième espace interne, d'une troisième électrode externe (23) formée sur la surface externe dudit élément capteur, et dudit électrolyte solide situé entre ladite deuxième électrode interne de mesure et ladite troisième électrode externe, ladite seconde cellule de pompage électrochimique de mesure ajustant une pression partielle d'oxygène près d'une surface de ladite seconde électrode de mesure à l'intérieur de la pompe de telle sorte que le monoxyde de carbone généré par le biais de la décomposition dudit composant de dioxyde de carbone est brûlé sélectivement près de la surface de ladite seconde électrode de mesure à l'intérieur de la pompe ;
un espace de gaz de référence (43) dans lequel est introduit un gaz de référence ; et
une électrode de référence (42) formée de sorte à faire face audit espace de gaz de référence,
dans lequel ledit capteur de gaz identifie
la concentration dudit composant de vapeur d'eau existant dans ledit gaz de mesure sur la base de l'amplitude d'un courant passant entre ladite première électrode interne de mesure et ladite deuxième électrode externe lorsque ladite première cellule de pompage électrochimique de mesure fournit de l'oxygène audit deuxième espace interne, et
la concentration dudit composant de dioxyde de carbone existant dans ledit gaz de mesure sur la base de l'amplitude d'un courant passant entre ladite deuxième électrode interne de mesure et ladite troisième électrode externe lorsque ladite seconde cellule de pompage électrochimique de mesure fournit de l'oxygène à une surface de ladite deuxième électrode interne de mesure.

11. Procédé selon la revendication 10, dans lequel
ladite cellule de pompage électrochimique principale (21) ajuste, par le biais de l'ajustement d'une première tension devant être appliquée entre ladite électrode interne principale et ladite première électrode externe, la pression partielle d'oxygène dudit premier espace interne de telle sorte que sensiblement tout ledit composant de vapeur d'eau et ledit composant d'oxyde de carbone sont décomposés,
ladite première cellule de pompage électrochimique de mesure (50) ajuste, par le biais de l'ajustement d'une deuxième tension devant être appliquée entre ladite première électrode interne de mesure et ladite deuxième électrode externe, la pression partielle d'oxygène dudit deuxième espace interne de telle sorte que l'hydrogène généré par le biais de la décomposition dudit composant de vapeur d'eau est brûlé en totalité, et
ladite seconde cellule de pompage de mesure (47) ajuste, par le biais de l'ajustement d'une troisième tension devant être appliquée entre ladite seconde électrode interne de mesure et ladite troisième électrode externe, une pression partielle d'oxygène près de la surface de ladite seconde électrode interne de mesure de telle sorte que le monoxyde de carbone généré par le biais de la décomposition dudit composant d'oxyde de carbone est brûlé en totalité.

12. Procédé selon la revendication 11, dans lequel ledit élément capteur comprend en outre :
une première cellule de capteur de détection de pression partielle d'oxygène (60) formée de ladite électrode interne principale, de ladite électrode de référence et dudit électrolyte solide situé entre ladite électrode interne principale et ladite électrode de référence, ledit premier capteur de détection de pression partielle d'oxygène détectant l'amplitude de ladite première tension ;
une deuxième cellule de capteur de détection de pression partielle d'oxygène (61) formée de ladite première électrode interne de mesure, de ladite électrode de référence et dudit électrode solide situé entre ladite première électrode interne de mesure et ladite électrode de référence, ladite deuxième cellule de capteur de détection de pression partielle d'oxygène détectant l'amplitude de ladite deuxième tension ; et
une troisième cellule de capteur de détection de pression partielle d'oxygène (41) formée de ladite seconde électrode interne de mesure, de ladite électrode de référence et dudit électrolyte solide situé entre ladite seconde électrode interne de mesure et ladite électrode de référence, ladite troisième cellule de capteur de pression partielle d'oxygène détectant l'amplitude de ladite troisième tension,
la pression partielle d'oxygène dudit premier espace interne est ajustée sur la base d'une valeur détectée de ladite première tension dans ladite première cellule de capteur de détection de pression partielle d'oxygène,
la pression partielle d'oxygène dudit deuxième espace interne est ajustée sur la base d'une valeur détectée de ladite deuxième tension dans ladite seconde cellule de capteur de détection de pression partielle d'oxygène, et
la pression partielle d'oxygène près de la surface de ladite seconde électrode interne de mesure est ajustée sur la base d'une valeur détectée de ladite troisième tension dans ladite troisième cellule de capteur de détection de pression partielle d'oxygène.

13. Procédé selon l'une quelconque des revendications 11 ou 12, dans lequel les concentrations dudit composant de vapeur d'eau et dudit composant d'oxyde de carbone sont identifiées tout en satisfaisant une relation selon laquelle
la pression partielle d'oxygène dudit deuxième espace interne est plus grande que la pression partielle d'oxygène dudit premier espace interne, et
la pression partielle d'oxygène près de la surface de ladite seconde électrode interne de mesure est supérieure ou égale à la pression partielle d'oxygène dudit deuxième espace interne.

14. Procédé selon la revendication 13, dans lequel les concentrations dudit composant de vapeur d'eau et dudit composant d'oxyde de carbone sont identifiées avec
la pression partielle d'oxygène dudit premier espace interne définie à une valeur de 10⁻¹⁰ atm (10⁻⁵ Pa) à 10⁻³⁰ atm (10⁻²⁵ Pa),
la pression partielle d'oxygène dudit deuxième espace interne définie à une valeur de 10⁻⁵ atm (10⁰ Pa) à 10⁻¹⁵ atm (10⁻¹⁰ Pa), et
la pression partielle d'oxygène près de la surface de ladite seconde électrode interne de mesure définie à une valeur de 10⁰ atm (10⁵ Pa) à 10⁻¹⁵ atm (10⁻¹⁰ Pa).

15. Procédé selon la revendication 13 ou 14, qui est conçu pour définir une pression partielle d'oxygène cible dans ledit premier espace interne qui devient plus petite au fur et à mesure que la pression partielle d'oxygène dans ledit gaz de mesure devient plus grande.
